# EUROPEAN PATENT APPLICATION

(11) **EP 4 294 106 A1**
(43) Date of publication of application: **20.12.2023**
(21) Application number: 22778753.8
(22) Date of filing: 25.03.2022
(51) Int. Cl.: H04W 74/02, H04W 76/28

(54) **SIDELINK COMMUNICATION METHOD AND APPARATUS**

(30) Priority: 01.04.2021 CN 202110358251
(71) Applicant: Huawei Technologies Co., Ltd., Shenzhen, Guangdong 518129 (CN)
(72) Inventor: PENG, Wenjie, Shenzhen, Guangdong 518129 (CN); XIAO, Xiao, Shenzhen, Guangdong 518129 (CN); ZHAO, Li, Shenzhen, Guangdong 518129 (CN)
(74) Representative: Pfenning, Meinig & Partner mbB
(86) International application number: PCT/CN2022/082899
(87) International publication number: WO 2022/206570

(57) **Abstract**

This application discloses a sidelink communication method and an apparatus, and relates to the field of wireless communication technologies. In this application, a first terminal and a second terminal are in a same communication group. The second terminal receives first control information and first data from the first terminal, where a cast type indicated by the first control information is SL groupcast transmission with a NACK only feedback. The second terminal starts a first timer at a specified location after a HARQ feedback resource corresponding to the first data, where duration of the first timer indicates minimum duration that elapses before SL resource scheduling information used for HARQ retransmission is expected to be received. After the first timer expires, if the second terminal successfully decodes the first data and detects a NACK on the HARQ feedback resource, the second terminal starts a second timer, where duration of the second timer indicates maximum duration that elapses before the SL resource scheduling information used for HARQ retransmission is received. According to this application, transmission reliability can be ensured while transmission efficiency is improved.

## Description

### CROSS-REFERENCE TO RELATED APPLICATIONS

This application claims priority to Chinese Patent Application No. 202110358251.7, filed with the China National Intellectual Property Administration on April 1, 2021 and entitled "SIDELINK COMMUNICATION METHOD AND APPARATUS", which is incorporated herein by reference in its entirety.

### TECHNICAL FIELD

This application relates to the field of wireless communication technologies, and in particular, to a sidelink communication method and an apparatus.

### BACKGROUND

In a wireless communication system, data communication may be performed between UEs (user equipments, also referred to as terminals) over a network, or communication between UEs may be directly performed without a network device. A link between UEs is referred to as a sidelink (sidelink, SL), and a typical application scenario of sidelink (SL) communication is vehicle-to-everything (V2X). In vehicle-to-everything, each vehicle is a UE, and data transmission may be directly performed between UEs through the SL without the network. This can effectively reduce a communication delay.

A plurality of cast types (cast types) are supported on the sidelink (SL), including SL groupcast (groupcast), SL unicast (unicast), and the like. SL communication may further support a discontinuous reception (discontinuous reception, DRX) mechanism.

When DRX is used in SL communication, how to balance transmission efficiency and transmission reliability is a problem to be resolved currently.

### SUMMARY

Embodiments of this application provide an SL communication method and an apparatus, to ensure data transmission reliability.

According to a first aspect, a sidelink SL communication method is provided. A first terminal and a second terminal in the method are terminals in a same communication group. The method includes: The second terminal receives first control information and first data from the first terminal, where a cast type indicated by the first control information is SL groupcast transmission with a negative acknowledgement (NACK) only feedback;
the second terminal starts a first timer at a specified location after a hybrid automatic repeat request (HARQ) feedback resource corresponding to the first data, where duration of the first timer indicates minimum duration that elapses before SL resource scheduling information used for HARQ retransmission is expected to be received; and
when the first timer expires, if the second terminal successfully decodes the first data and detects a NACK on the HARQ feedback resource, the second terminal starts a second timer, where duration of the second timer indicates maximum duration that elapses before the SL resource scheduling information used for HARQ retransmission is received.

Optionally, the first timer is an SL HARQ RTT timer, and the second timer is a retransmission timer.

Optionally, the HARQ feedback resource is a physical sidelink feedback channel (PSFCH) resource, and the specified location after the HARQ feedback resource corresponding to the first data is the 1^{st} symbol after the PSFCH resource of the first data.

Based on the foregoing implementation, the first terminal (a data transmitter UE) sends the first data to the second terminal (a data receiver UE), and indicates, via the first control information, that the cast type is SL groupcast transmission with a NACK only feedback (SL groupcast option 1). After receiving the first data and the first control information, the second terminal starts the first timer at the specified location after the HARQ feedback resource corresponding to the first data. After the first timer expires, if the second terminal successfully decodes the first data but receives, on the HARQ feedback resource corresponding to the first data, a NACK sent by another data receiving terminal in the communication group (where the NACK is fed back for the first data), the second terminal starts the second timer. When a HARQ feedback type is a HARQ option 1 (NACK only feedback), data receiver UEs in the communication group feed back NACKs on the same HARQ feedback resource. In other words, all terminals in the communication group can sense the NACKs fed back on the HARQ feedback resource. In this way, provided that there is one data receiver UE in the communication group feeding back a NACK on the HARQ feedback resource corresponding to the first data, both a terminal that fails in decoding and feeds back a NACK in the communication group and a terminal that successfully decodes the first data start the second timer. In this way, for transmission of the first data, timers of all data receiver UEs in the communication group are maintained consistently, thereby ensuring data transmission reliability.

In a possible implementation, the first timer and the second timer are associated with SL process identification information indicated by the first control information, the SL process identification information includes an SL process identifier, cast type indication information, a source L1 identifier, and a destination L1 identifier, and the cast type indication information indicates SL groupcast transmission with a NACK only feedback, or indicates SL groupcast transmission.

For example, the first control information includes first-stage sidelink control information (SCI) and second-stage SCI, and the second-stage SCI is in a first format or a second format. The second-stage SCI in the first format may include at least one of the SL process identifier, the cast type indication information, the source L1 identifier, and the destination L1 identifier, for example, may include the SL process identifier, the cast type indication information, the source L1 identifier, and the destination L1 identifier. The cast type indication information indicates SL groupcast transmission with a NACK only feedback. The second-stage SCI in the second format is applied to a HARQ option 1 scenario (to be specific, SL groupcast transmission with a NACK only feedback). For example, the source L1 identifier is a part of an L2 identifier allocated by the first terminal, and the destination L1 identifier is a part of an L2 identifier corresponding to the communication group.

Based on the foregoing implementation, when starting the first timer, the second terminal actually starts the first timer for the SL process identification information indicated by the first control information, so that the first timer is associated with the SL process identification information indicated by the first control information. If receiving a NACK that is sent by another terminal in the communication group and that corresponds to the first data, after the first timer expires, the second terminal starts the second timer for the SL process identification information indicated by the first control information, so that the second timer is associated with the SL process identification information indicated by the first control information. Therefore, provided that there is one terminal in the communication group failing to decode the first data and feeding back a NACK, the first timer and the second timer that are started by all receiver UEs in the communication group are associated with transmission of the first data. In this way, it can be ensured that for transmission of the first data, timers of all terminals in the communication group are maintained consistently, thereby avoiding a timer maintenance error.

Further, the method includes: The second terminal associates the first data with an SL process, where the SL process is used to process the first data; and when successfully decoding the first data, the second terminal releases the SL process associated with the first data.

Based on the foregoing implementation, the second terminal (a data receiver UE) associates the first data with an SL process, to process the first data based on the SL process, and releases the SL process when decoding succeeds, so that the SL process can be used for other data transmission.

In a possible implementation, that the second terminal starts a first timer includes: The second terminal starts the first timer for a first SL process, where the first SL process is associated with the SL process identification information indicated by the first control information, and the first SL process is used to process the first data. That the second terminal starts a second timer includes: The second terminal starts the second timer for the first SL process.

Because the first SL process is associated with the SL process identification information indicated by the first control information, the first timer and the second timer are associated with the SL process identification information indicated by the first control information, that is, associated with transmission of the first data. Therefore, it can be ensured that for transmission of the first data, timers of all terminals in the communication group are maintained consistently, thereby avoiding a timer maintenance error.

Further, the method includes: If successfully decoding the first data and detecting a NACK on the HARQ feedback resource, the second terminal continues to occupy the first SL process; or if successfully decoding the first data and detecting no NACK on the HARQ feedback resource, the second terminal releases the first SL process.

For example, after receiving the first data and the first control information, the second terminal starts the first timer for the first SL process. If the second terminal successfully decodes the first data but receives a NACK sent by another terminal in the communication group on the HARQ feedback resource corresponding to the first data, it indicates that there is still a data receiving terminal failing to decode the first data in the communication group, and therefore the first SL process continues to be occupied. When the first timer expires, the second timer is started for the SL process. If the second terminal successfully decodes the first data and receives no NACK sent by any terminal in the communication group for the first data, it indicates that the first data has been successfully decoded by each data receiving terminal in the communication group, and therefore the first SL process is released. In this way, provided that there is one terminal in the communication group feeding back a NACK for the first data, all data receiver UEs in the communication group maintain an occupied state of the SL process corresponding to the first data. In addition, because both the first timer and the second timer correspond to the SL process (in other words, both the first timer and the second timer are started for the SL process), it can be ensured that the first timer and the second timer that are started by all the receiving terminals in the communication group are associated with the SL process used to process the first data, thereby avoiding a timer maintenance error.

In a possible implementation, the method further includes: If successfully decoding the first data, the second terminal releases the first SL process;
the second terminal receives second data and second control information, where a cast type indicated by the second control information is groupcast transmission with a NACK only feedback;
the second terminal associates a second SL process with SL process identification information indicated by the second control information, where the second process is used to process the second data; and
if determining that the second data is retransmitted data of the first data, the second terminal releases the second SL process.

Based on the foregoing implementation, because the second terminal has successfully decoded the first data, if it is determined that the second data is retransmitted data of the first data, the second data may no longer be processed. In this way, the second SL process used to process the second data may be released.

In a possible implementation, the first control information does not indicate a resource location of the second control information, and the second control information indicates a retransmission resource of the first data.

Based on the foregoing implementation, for a scenario in which a plurality of data transmitter UEs (first terminals) reserve a plurality of SL resources, if the first control information currently received by the second terminal does not indicate a resource location of control information used to schedule an SL retransmission resource, that is, if an SL resource indicated by the first control information is the last retransmission resource, the SL communication method (to be specific, after the first timer started by the second terminal expires, although the second terminal successfully decodes the first data, if the second terminal receives, on the HARQ feedback resource corresponding to the first data, a NACK fed back by another terminal in the communication group, the second terminal also needs to start the second timer) provided in the foregoing embodiment of this application is performed. Provided that there is one terminal in the communication group feeding back a NACK, all data receiving terminals in the communication group start the second timer after the first timer expires. In this way, it is ensured that timers of all data receiver UEs in the communication group are maintained consistently. Further, when the data sending terminal (the first terminal) transmits new data by using the last retransmission resource, a terminal that succeeds in decoding can also receive the new data, to ensure data transmission reliability.

According to a second aspect, an SL communication method is provided. A first terminal and a second terminal in the method are terminals in a same communication group. The method may include: The second terminal receives first control information and first data from the first terminal;
the second terminal starts a first timer at a specified location, where the first timer is associated with SL process identification information indicated by the first control information, and duration of the first timer indicates minimum duration that elapses before SL resource scheduling information used for retransmission is expected to be received; and
the second terminal starts a second timer based on a receiving status of the first data after the first timer expires, where the second timer is associated with the SL process identification information indicated by the first control information, and duration of the second timer indicates maximum duration that elapses before the SL resource scheduling information used for retransmission is received.

For example, the SL process identification information includes an SL process identifier, cast type indication information, a source L1 identifier, and a destination L1 identifier.

In a possible implementation, a cast type indicated by the first control information includes one of the following:
SL unicast transmission;
SL groupcast transmission;
SL groupcast transmission with a NACK only feedback; or
SL groupcast transmission with a feedback of at least one of a NACK and an ACK.

In a possible implementation, if the cast type indicated by the first control information is SL unicast transmission, SL groupcast transmission, or SL groupcast transmission with a feedback of one of a NACK and an ACK, that the second terminal starts a second timer based on a receiving status of the first data after the first timer expires includes: If failing to decode the first data, the second terminal starts the second timer after the first timer expires.

Alternatively, if the cast type indicated by the first control information is SL groupcast with a NACK only feedback, that the second terminal starts a second timer based on a receiving status of the first data after the first timer expires includes: If failing to decode the first data, the second terminal starts the second timer after the first timer expires; or if successfully decoding the first data and receiving a NACK on a hybrid automatic repeat request HARQ feedback resource corresponding to the first data, the second terminal starts the second timer after the first timer expires, where the first terminal and the second terminal are terminals in the same communication group.

In a possible implementation, the specified location includes:
the 1^{st} symbol after a resource carrying first-stage control information, where the first control information includes the first-stage control information; the 1^{st} symbol after the first control information is completely received; the 1^{st} symbol after a resource carrying the first data; or the 1^{st} symbol after the HARQ feedback resource corresponding to the first data.

In a possible implementation, the first control information does not indicate a resource location of second control information, and the second control information indicates a retransmission resource of the first data.

According to a third aspect, an SL communication method is provided. A first terminal and a second terminal in the method are terminals in a same communication group. The method may include: The second terminal receives first control information and first data from the first terminal;
the second terminal starts a first timer for a first SL process at a specified location, where duration of the first timer indicates minimum duration that elapses before SL resource scheduling information used for retransmission is expected to be received, the first SL process is associated with SL process identification information indicated by the first control information, and the first SL process is used to process the first data; and
the second terminal starts a second timer for the first SL process based on a receiving status of the first data after the first timer expires, where duration of the second timer indicates maximum duration that elapses before the SL resource scheduling information used for retransmission is received.

For example, the SL process identification information includes an SL process identifier, cast type indication information, a source L1 identifier, and a destination L1 identifier.

In a possible implementation, a cast type indicated by the first control information includes one of the following:
SL unicast transmission;
SL groupcast transmission;
SL groupcast transmission with a NACK only feedback; or
SL groupcast transmission with a feedback of at least one of a NACK and an ACK.

In a possible implementation, if the cast type indicated by the first control information is SL unicast transmission, SL groupcast transmission, or SL groupcast transmission with a feedback of one of a NACK and an ACK, that the second terminal starts a second timer based on a receiving status of the first data after the first timer expires includes: If failing to decode the first data, the second terminal starts the second timer after the first timer expires.

Alternatively, if the cast type indicated by the first control information is SL groupcast with a NACK only feedback, that the second terminal starts a second timer based on a receiving status of the first data after the first timer expires includes: If failing to decode the first data, the second terminal starts the second timer after the first timer expires; or if successfully decoding the first data and receiving a NACK on a hybrid automatic repeat request HARQ feedback resource corresponding to the first data, the second terminal starts the second timer after the first timer expires, where the first terminal and the second terminal are terminals in the same communication group.

In a possible implementation, the specified location includes: the 1^{st} symbol after a resource carrying first-stage control information, where the first control information includes the first-stage control information; the 1^{st} symbol after the first control information is completely received; the 1^{st} symbol after a resource carrying the first data; or the 1^{st} symbol after the HARQ feedback resource corresponding to the first data.

In a possible implementation, the method further includes: If successfully decoding the first data and detecting a NACK on the HARQ feedback resource, the second terminal continues to occupy the first SL process; or if successfully decoding the first data and detecting no NACK on the HARQ feedback resource, the second terminal releases the first SL process.

In a possible implementation, the method further includes: If successfully decoding the first data, the second terminal releases the first SL process; the second terminal receives second data and second control information; the second terminal associates a second SL process with SL process identification information indicated by the second control information, where the second process is used to process the second data; and if determining that the second data is retransmitted data of the first data, the second terminal releases the second SL process.

In a possible implementation, the first control information does not indicate a resource location of the second control information, and the second control information indicates a retransmission resource of the first data.

According to a fourth aspect, an SL communication method is provided. A first terminal and a second terminal in the method are terminals in a same communication group. The method may include: The second terminal receives first control information and first data from the first terminal, where the first control information includes indication information, and the indication information indicates the second terminal to start a second timer after a first timer expires, duration of the first timer indicates minimum duration that elapses before SL resource scheduling information used for HARQ retransmission is expected to be received, duration of the second timer indicates maximum duration that elapses before the SL resource scheduling information used for HARQ retransmission is received, and the first terminal and the second terminal are terminals in the same communication group; and the second terminal starts the second timer based on the indication information after the first timer expires.

Optionally, the first timer is an SL HARQ RTT timer, and the second timer is a retransmission timer.

Based on the foregoing implementation, a data transmitter UE (the first terminal) indicates a data receiver UE (the second terminal) in the communication group to start the second timer after the first timer expires. In this way, regardless of whether the data receiver UE in the communication group successfully decodes the first data, the data receiver UE in the communication group starts the second timer after the first timer expires. Therefore, for transmission of the first data, timers of all data receiver UEs in the communication group are maintained consistently, thereby ensuring data transmission reliability.

In a possible implementation, the first control information indicates SL groupcast transmission with a NACK only feedback, the first control information indicates SL groupcast transmission with a feedback of one of a NACK and an ACK, or the first control information indicates SL groupcast transmission.

The foregoing implementation may be applied to an SL groupcast transmission scenario, for example, may be applied to an SL groupcast option 1 scenario (to be specific, SL groupcast with a NACK only feedback), or may be applied to an SL groupcast option 2 scenario (to be specific, SL groupcast with a feedback of one of a NACK and an ACK).

In a possible implementation, the indication information further indicates a start moment of the second timer.

In a possible implementation, the first timer and the second timer are associated with SL process identification information indicated by the first control information, the SL process identification information includes an SL process identifier, cast type indication information, a source L1 identifier, and a destination L1 identifier, and the cast type indication information indicates SL groupcast transmission with a NACK only feedback, or indicates SL groupcast transmission.

Further, the method includes: The second terminal associates the first data with an SL process, where the SL process is used to process the first data; and when successfully decoding the first data, the second terminal releases the SL process associated with the first data.

In a possible implementation, that the second terminal starts the first timer includes: The second terminal starts the first timer for a first SL process, where the first SL process is associated with the SL process identification information indicated by the first control information, and the first SL process is used to process the first data.

That the second terminal starts a second timer includes: The second terminal starts the second timer for the first SL process.

Further, the method includes: If successfully decoding the first data and detecting a NACK on a HARQ feedback resource, the second terminal continues to occupy the first SL process; or if successfully decoding the first data and detecting no NACK on a HARQ feedback resource, the second terminal releases the first SL process.

In a possible implementation, the method further includes: If successfully decoding the first data, the second terminal releases the first SL process; the second terminal receives second data and second control information; the second terminal associates a second SL process with SL process identification information indicated by the second control information, where the second process is used to process the second data; and if determining that the second data is retransmitted data of the first data, the second terminal releases the second SL process.

In a possible implementation, the first control information does not indicate a resource location of the second control information, and the second control information indicates a retransmission resource of the first data.

According to a fifth aspect, an SL communication method is provided. A first terminal and a second terminal in the method are terminals in a same communication group. The method may include: The first terminal sends first data and first control information to a terminal in the communication group to which the first terminal belongs, where the first control information includes indication information, the indication information indicates the terminal in the communication group to start a second timer when a first timer expires, duration of the first timer indicates minimum duration that elapses before SL resource scheduling information used for HARQ retransmission is expected to be received, duration of the second timer indicates maximum duration that elapses before the SL resource scheduling information used for HARQ retransmission is received, and the first terminal and the second terminal are terminals in the same communication group.

In a possible implementation, before the first terminal sends the first data and the first control information to the terminal in the communication group, the method further includes: The first terminal determines that the terminal in the communication group needs to be indicated to start the second timer after the first timer expires; or the first terminal determines, based on an indication of a base station, to indicate the terminal in the communication group to start the second timer after the first timer expires.

In a possible implementation, the method further includes: The first terminal determines that the terminal in the communication group needs to be indicated to start the second timer after the first timer expires, and notifies a base station that the terminal in the communication group has been indicated to start the second timer after the first timer expires.

Based on the foregoing implementation, in a scenario in which an SL groupcast resource scheduling manner is a mode 1 (to be specific, an SL resource used by a data transmitter UE to perform data transmission is scheduled by the base station), the base station may learn that the terminal in the communication group has been indicated to start the second timer after the first timer expires, so that the terminal is in an active state. In this way, new data can be scheduled during running of the second timer, so that a terminal that succeeds in decoding can receive the new data. Further, in one aspect, system transmission efficiency can be improved, and in another aspect, data transmission reliability can be ensured.

In a possible implementation, the method further includes: The first terminal sends new data to the terminal in the communication group during running of the second timer.

In a possible implementation, the first control information indicates SL groupcast transmission with a NACK only feedback, the first control information indicates SL groupcast transmission with a feedback of one of a NACK and an ACK, or the first control information indicates SL groupcast transmission.

In a possible implementation, the indication information further indicates a start moment of the second timer.

In a possible implementation, the first control information does not indicate a resource location of second control information, and the second control information indicates a retransmission resource of the first data.

According to a sixth aspect, an SL communication method is provided. A first terminal and a second terminal in the method are terminals in a same communication group. The method may include: The first terminal determines that all terminals other than the first terminal in the communication group to which the first terminal belongs start a second timer, where duration of the second timer indicates maximum duration that elapses before SL resource scheduling information used for HARQ retransmission is received; and the first terminal sends first indication information to a base station, where the first indication information indicates that all the terminals other than the first terminal in the communication group start the second timer.

Optionally, the second timer is started after a first timer expires, the second timer is a retransmission timer, and the first timer is an SL HARQ RTT timer.

Based on the foregoing implementation, in a scenario in which an SL groupcast resource scheduling manner is a mode 1 (to be specific, an SL resource used by a data transmitter UE to perform data transmission is scheduled by the base station), the base station may learn that all terminals in the communication group start the second timer, that is, are in an active state. In this way, new data can be scheduled during running of the second timer, so that a terminal that succeeds in decoding can receive the new data. Further, in one aspect, system transmission efficiency can be improved, and in another aspect, data transmission reliability can be ensured.

In a possible implementation, the sending first indication information to a base station includes: The first terminal sends the first indication information based on a dedicated SL PUCCH resource configured by the base station for the first indication information; or the first terminal sends the first indication information based on a resource, resource group, or transmission format that is used to transmit the first indication information and that is indicated by SL PUCCH configuration information configured by the base station.

In a possible implementation, if the first terminal indicates the terminal in the communication group to feed back one of a NACK and an ACK, the method further includes: If the first terminal receives no NACK or ACK sent by the second terminal for N consecutive times, the first terminal sends second indication information to the base station, where the second indication information indicates the base station to forbid scheduling new data transmission for the terminal in the communication group during running of only the second timer, where N is an integer greater than 1, and the second terminal is any terminal other than the first terminal in the communication group.

According to a seventh aspect, an SL groupcast communication method is provided, and includes: A first terminal receives an SL resource that is for newly transmitted data and that is indicated by a base station;
the first terminal determines that, in a time domain range corresponding to a PSCCH resource, all terminals other than the first terminal in a communication group to which the first terminal belongs are in active time, where the PSCCH resource is used to carry SL resource scheduling information used for HARQ retransmission; and
the first terminal sends, on the PSCCH resource, scheduling information of the SL resource indicated by the base station, and sends the newly transmitted data on a PSSCH resource indicated by the scheduling information of the SL resource.

According to an eighth aspect, a communication apparatus is provided, and includes: one or more processors, and one or more memories. The one or more memories store one or more computer programs, and the one or more computer programs include instructions. When the instructions are executed by the one or more processors, the communication apparatus is enabled to perform the method according to any one of the first aspect to the sixth aspect.

According to a ninth aspect, a computer-readable storage medium is provided. The computer-readable storage medium includes a computer program, and when the computer program is run on a computing device (for example, a vehicle-mounted terminal), the computing device is enabled to perform the method according to any one of the first aspect to the sixth aspect.

According to a tenth aspect, a chip is provided. The chip is coupled to a memory, and is configured to: read and execute program instructions stored in the memory, to implement the method according to any one of the first aspect to the seventh aspect.

According to an eleventh aspect, a computer program product is provided. When the computer program product is invoked by a computer, the computer is enabled to perform the method according to any one of the first aspect to the seventh aspect.

For beneficial effects of the second aspect to the eleventh aspect, refer to the beneficial effects of the first aspect. Details are not described again.

### BRIEF DESCRIPTION OF DRAWINGS

FIG. 1 is a schematic diagram of direct communication performed between UEs based on a PC5 interface;
FIG. 2 is a schematic diagram of groupcast communication between UEs;
FIG. 3 is a schematic diagram of a basic DRX pattern (pattern) on a Uu interface between a UE and a base station;
FIG. 4 is a schematic diagram of maintaining a DRX timer in sidelink (SL) unicast communication;
FIG. 5 is a schematic diagram of a sidelink (SL) groupcast HARQ feedback;
FIG. 6 is a schematic diagram of inconsistent Rx UE decoding states in a sidelink (SL) groupcast HARQ option 1 scenario;
FIG. 7 is a schematic diagram of inconsistent Rx UE decoding states in a sidelink (SL) groupcast HARQ option 2 scenario;
FIG. 8 is a schematic diagram of an SL groupcast communication scenario according to an embodiment of this application;
FIG. 9 is a schematic flowchart of an SL groupcast communication method according to an embodiment of this application;
FIG. 10 is a schematic diagram in which one piece of SCI indicates a resource location of next SCI according to an embodiment of this application;
FIG. 11 is a schematic diagram of maintaining a timer when decoding results of Rx UEs are inconsistent in an SL groupcast HARQ option 1 scenario according to an embodiment of this application;
FIG. 12 is a schematic flowchart of an SL communication method according to an embodiment of this application;
FIG. 13 is a schematic flowchart of an SL communication method according to an embodiment of this application;
FIG. 14 is a schematic flowchart of an SL groupcast communication method according to an embodiment of this application;
FIG. 15 is a schematic flowchart of an SL groupcast communication method according to an embodiment of this application;
FIG. 16 is a schematic flowchart of an SL groupcast communication method applied to a data transmitter according to an embodiment of this application;
FIG. 17 is a schematic flowchart of an SL groupcast communication method applied to a data transmitter according to an embodiment of this application;
FIG. 18 is a schematic diagram of active time (active time) according to an embodiment of this application;
FIG. 19 is a schematic diagram of a structure of a terminal according to an embodiment of this application; and
FIG. 20 is a schematic diagram of a structure of a communication apparatus according to an embodiment of this application.

### DESCRIPTION OF EMBODIMENTS

To understand this application more clearly, the following first briefly describes related technologies in this application.

### (1) Cast type between UEs

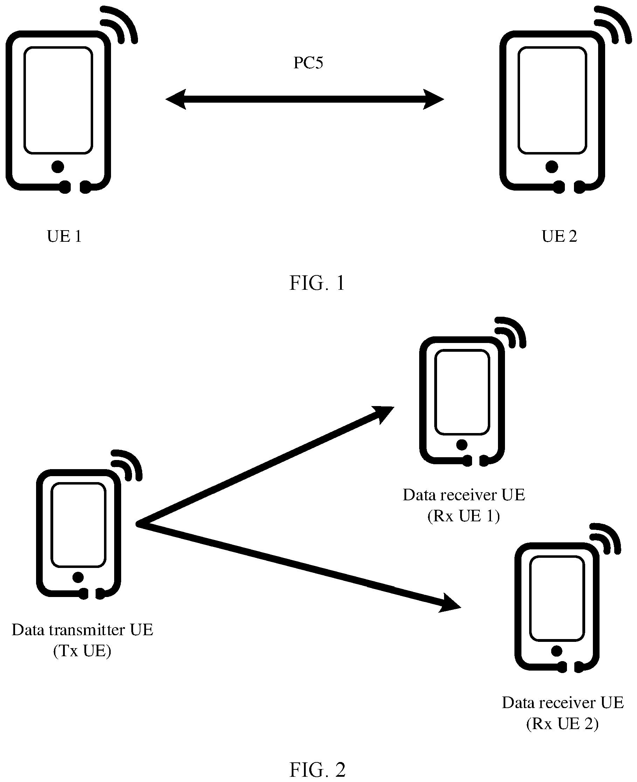

In a wireless communication system, an interface for communication between UEs is referred to as a PC5 interface, which is similar to a Uu interface between a UE and a base station. As shown in FIG. 1, a UE 1 communicates with a UE 2 based on a PC5 interface. A plurality of cast types (cast types) such as broadcast communication, unicast communication, and groupcast communication can be supported on a sidelink (SL) between UEs.

Broadcast communication is similar to broadcasting system information by a base station. To be specific, a UE sends data of a broadcast service to the outside without encrypting the data, and any other UE in an effective receiving range that is interested in the broadcast service can receive the data of the broadcast service. When sending the data in a broadcast communication mode, the UE sends a source identifier and a destination identifier along with the data. For example, the source identifier is allocated by a data transmitter UE, and the destination identifier is an identifier corresponding to the broadcast service.

Unicast communication is similar to data communication performed after a radio resource control (radio resource control, RRC) connection is established between a UE and a base station, where a unicast connection needs to be established between two UEs first. After the unicast connection is established, the two UEs may perform data communication based on a negotiated identifier. Data may be encrypted or may not be encrypted. When sending the data in a unicast communication mode, the UE sends a source identifier and a destination identifier along with the data, where the destination identifier is an identifier allocated by a data receiver UE for the unicast connection.

At least two UEs may form a communication group (or referred to as a groupcast group or a terminal group). Groupcast communication means that data of a groupcast service sent by any UE in the communication group can be received by another UE in the communication group. FIG. 2 uses three UEs as an example, and shows that when a Tx UE (a data transmitter UE) in a communication group sends data, other UEs (an Rx UE 1 and an Rx UE 2 shown in FIG. 2) in the communication group can receive the data. When sending the data in a groupcast communication mode, the UE sends a source identifier and a destination identifier along with the data, where the destination identifier is an identifier corresponding to the communication group. In one communication group, all UEs send and receive data by using a same destination identifier, and different UEs send data by using respective source identifiers.

### (2) Communication mode based on a sidelink (SL) groupcast hybrid automatic repeat request (hybrid automatic repeat request, HARQ)

Currently, the sidelink (SL) groupcast HARQ has been supported in the industry. The SL groupcast HARQ includes two HARQ feedback types, which are referred to as a HARQ option 1 and a HARQ option 2 for ease of distinguishing. For single data transmission, a data transmitter UE may use the HARQ option 1 or the HARQ option 2.

The HARQ option 1 specifies that a terminal feeds back only a negative acknowledgement (negative acknowledgement, NACK). If the HARQ option 1 is used, after receiving data sent by a data transmitter UE in a communication group, if decoding fails, a data receiver UE in the communication group feeds back a NACK to the data transmitter UE over a corresponding physical sidelink feedback channel (physical sidelink feedback channel, PSFCH) resource; or if decoding succeeds, a data receiver UE in the communication group does not need to feed back any information. In this scenario, PSFCH resources determined by all data receiver UEs in the communication group are the same. Provided that the data transmitter UE receives a NACK on the PSFCH resource, the data transmitter UE can consider that the data needs to be retransmitted without distinguishing which data receiver UE sends the NACK.

The HARQ option 2 specifies that a terminal feeds back one of a NACK and an acknowledgement (acknowledgement, ACK). If the HARQ option 2 is used, after receiving data, if decoding fails, a data receiver UE in a communication group feeds back a NACK to a data transmitter UE in the communication group over a corresponding PSFCH resource; or if decoding succeeds, a data receiver UE in a communication group feeds back an ACK to a data transmitter UE in the communication group over a corresponding PSFCH resource. In this manner, PSFCH resources determined by different data receiver UEs are different. The PSFCH resources are aligned in time domain, but different UEs have different PSFCH resources in frequency domain. The data transmitter UE may determine, based on different PSFCH resources, whether each data receiver UE successfully decodes the data.

In embodiments of this application, the HARQ option 1 is referred to as "a NACK only feedback", and the HARQ option 2 is referred to as "a feedback of one of a NACK and an ACK".

### (3) DRX communication over a Uu interface between a UE and a base station.

Over the Uu interface between the UE and the base station, to reduce power consumption caused by the UE persistently sensing a physical downlink control channel (physical downlink control channel, PDCCH) used by the base station to schedule an uplink physical resource and a downlink physical resource, the 3GPP specifies that DRX may be used. A basic working principle of DRX is as follows.

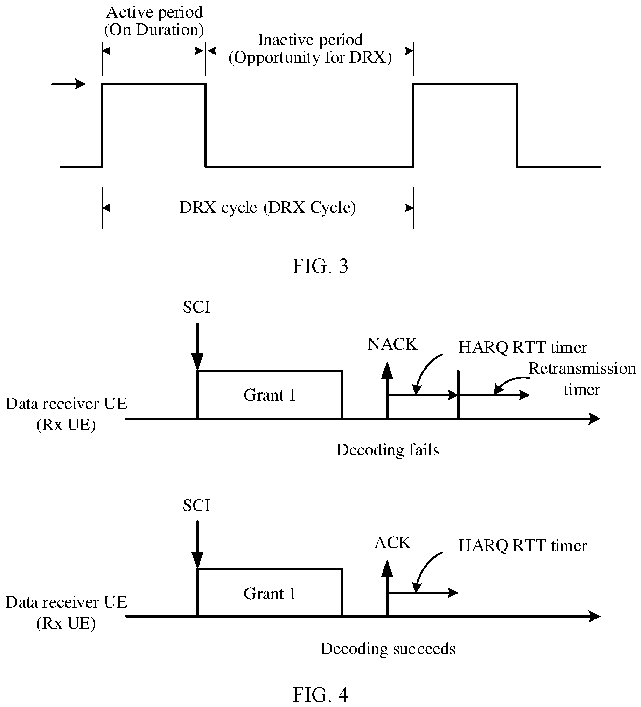

As shown in FIG. 3, a basic mechanism of DRX is to configure a DRX cycle (DRX cycle) for a UE in an RRC connected state. The DRX cycle includes two periods of time: "on duration" and "opportunity for DRX". "On duration" is also referred to as an active period, and "opportunity for DRX" is also referred to as an inactive period. During the period "on duration", the UE senses and receives a PDCCH. During the period "opportunity for DRX", the UE does not receive the PDCCH to reduce power consumption.

A value of "on duration" specifies time that needs to be consumed for sensing the PDCCH from a start location of the DRX cycle (DRX Cycle). In most cases, after the UE is scheduled on a PDCCH occasion (PDCCH occasion) and receives/sends data, the UE may probably continue to be scheduled in next several subframes. If the UE needs to wait for a next DRX cycle (DRX cycle) to receive/send the data, an extra delay is caused. To reduce such a delay, after being scheduled, the UE may continue to be in the active period, to be specific, persistently sense the PDCCH in the configured active period. An implementation mechanism is as follows. Each time the UE is scheduled to initially transmit a piece of new data, the UE starts (or restarts) a timer, which is referred to as an inactivity timer (drx-InactivityTimer). Then, the UE remains in an active state until the timer expires. The timer specifies duration during which the UE remains in the active state after successfully decoding a PDCCH for scheduling initial transmission of new data.

For HARQ retransmission of data, there is no fixed timing relationship between retransmission and previous transmission. Therefore, a time window (or referred to as a timer, namely, a HARQ RTT timer) is defined for each of an uplink HARQ and a downlink HARQ. After previous uplink transmission or downlink transmission and after the time window elapses, the UE is allowed to start to sense uplink or downlink retransmission. Each uplink HARQ process (HARQ process) and each downlink HARQ process have a respective HARQ RTT timer. When the HARQ RTT timer expires, for uplink transmission, the UE starts a retransmission timer (referred to as drx-RetransmissionTimerUL) for the corresponding HARQ process. For downlink transmission, if reception of data of the corresponding HARQ process fails, the UE starts a retransmission timer (referred to as drx-RetransmissionTimerDL) for the HARQ process. When drx-RetransmissionTimerUL or drx-RetransmissionTimerDL is run, the UE senses a PDCCH used to schedule HARQ retransmission.

In short, the HARQ RTT timer is mainly used to enable the UE to enter a dormant state for a short period of time. Due to a delay of the Uu interface between the UE and the base station (for example, there is a period of processing time during which the UE decodes downlink data after receiving previous transmission, the UE feeds back an ACK or a NACK to the base station, and the base station schedules a retransmission resource for the UE), the base station does not schedule the retransmission resource for the UE in this period of time. The retransmission timer is mainly used to enable the UE to sense, in the period of time, a retransmission resource that may be scheduled by the base station. After the timer expires, the UE no longer senses the retransmission resource.

### (4) Introduce DRX to sidelink (SL) unicast communication and groupcast communication that support a HARQ feedback.

DRX has been introduced in the industry for sidelink (SL) unicast communication and groupcast communication. The mechanism is similar to Uu DRX. To be specific, after receiving data, a data receiver UE starts a HARQ RTT timer of a corresponding SL process after sending HARQ feedback information. After the HARQ RTT timer expires, if the data of the process fails to be decoded, the data receiver UE starts a retransmission timer of the corresponding SL process. Implicitly, if decoding succeeds, the data receiver UE does not start a retransmission timer. FIG. 4 is a schematic diagram of maintaining a DRX timer in SL unicast communication. As shown in FIG. 4, if an Rx UE (a data receiving terminal) fails to decode data after receiving the data, the Rx UE sends a NACK to a Tx UE (a data sending terminal), and starts a HARQ RTT timer. After the timer expires, the Rx UE starts a retransmission timer. If an Rx UE (a data receiving terminal) successfully decodes data after receiving the data, the Rx UE sends an ACK to a Tx UE (a data sending terminal), and starts a HARQ RTT timer. After the timer expires, the Rx UE does not start a retransmission timer.

For sidelink (SL) communication, the industry currently provides two SL resource scheduling manners: a first mode (Mode 1) and a second mode (Mode 2). The first mode (Mode 1) means that an SL resource used by a data transmitter UE to perform data transmission is scheduled by a base station, and the UE obtains the SL resource from the base station. The second mode (Mode 2) means that an SL resource used by a data transmitter UE to perform data transmission is determined by the UE through sensing (sensing).

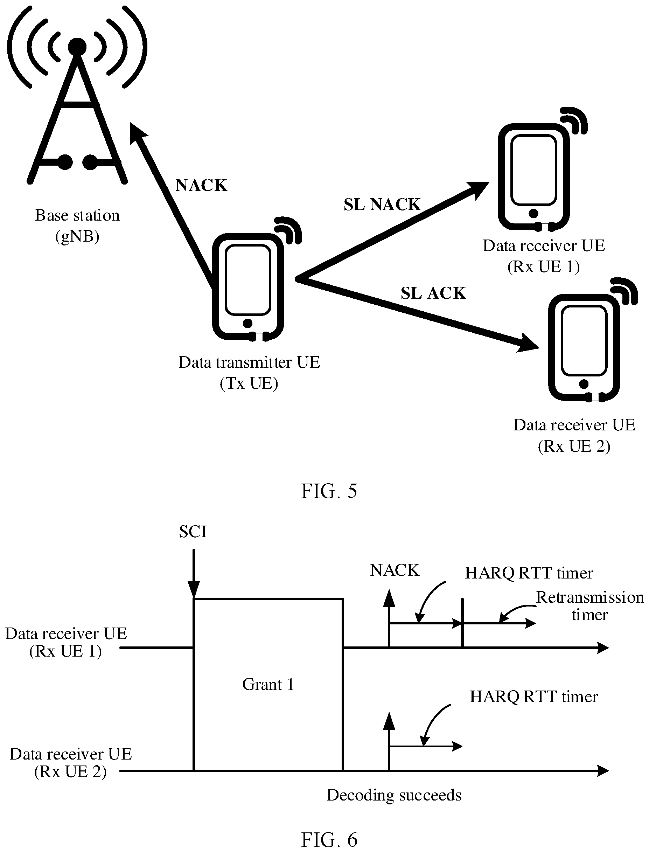

For sidelink (SL) unicast communication supporting a HARQ feedback, a conventional practice in the industry is as follows. After receiving a NACK fed back by a data receiver UE, the data transmitter UE further indicates the NACK to the base station, to request the base station to schedule a sidelink (SL) retransmission resource. For sidelink (SL) groupcast communication supporting a HARQ feedback, a conventional practice in the industry is as follows. Provided that the data transmitter UE receives a NACK fed back by one data receiver UE, the data transmitter UE feeds back the NACK to the base station. FIG. 5 is a schematic diagram of a sidelink (SL) groupcast HARQ feedback. As shown in the figure, a Tx UE (a data transmitter UE) receives an SL NACK fed back by an Rx UE 1 (a data receiver UE 1), receives an SL ACK fed back by an Rx UE 2 (a data receiver UE 2), and therefore, feeds back the NACK to a base station (gNB).

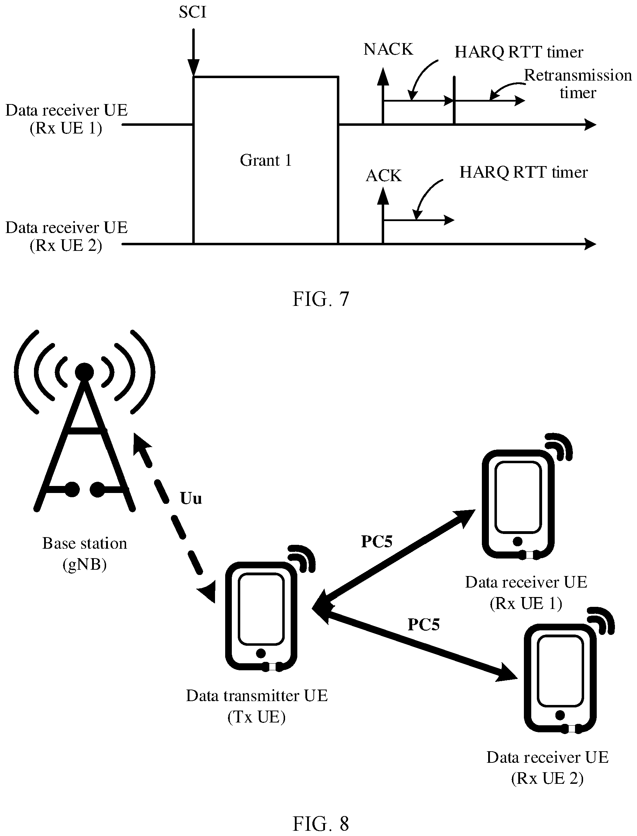

According to the foregoing conventional sidelink (SL) communication mode in the industry, for an SL groupcast scenario, due to a difference in communication environments, data decoding results of different data receiver UEs may be inconsistent for same data, and a retransmission timer may not be started. In a HARQ option 1 scenario (to be specific, a data receiver UE only needs to feed back a NACK when decoding fails, and does not need to perform a HARQ feedback when decoding succeeds) shown in FIG. 6, an Rx UE 2 does not send any feedback information to a Tx UE after decoding succeeds, and does not start a retransmission timer. If an Rx UE 1 fails in decoding, the Rx UE 1 sends a NACK to the Tx UE, and starts the retransmission timer. In a HARQ option 2 scenario (to be specific, a data receiver UE feeds back a NACK if decoding fails, and feeds back an ACK if decoding succeeds) shown in FIG. 7, an Rx UE 2 sends an ACK to a Tx UE after decoding succeeds, but does not start a retransmission timer. If an Rx UE 1 fails in decoding, the Rx UE 1 sends a NACK to the Tx UE, and starts the retransmission timer.

In the scenarios shown in FIG. 6 and FIG. 7, if a data transmitter UE obtains a sidelink (SL) resource in the mode 2 (to be specific, the UE determines the SL resource), if newly transmitted data of another SL process needs to be transmitted, the data transmitter UE needs to wait for a next moment at which all data receiver UEs are awake. If a data transmitter UE obtains an SL resource in the mode 1 (to be specific, the UE obtains the SL resource from the base station), after receiving a NACK from the data transmitter UE, the base station cannot know whether all or some of data receiver UEs fail in decoding. This is implemented based on the base station. It may be considered that all data receiver UEs start the retransmission timer, to attempt to schedule newly transmitted data of another process for the data transmitter UE. As a result, a data receiving UE that does not start the retransmission timer cannot receive the newly transmitted data. Consequently, system reliability is reduced.

Therefore, embodiments of this application provide a communication method and an apparatus, which may be applied to sidelink (SL) communication supporting DRX, for example, SL groupcast or unicast communication. According to embodiments of this application, running states of timers maintained by different data receiver UEs for same SL transmission are consistent, so that data transmission reliability can be ensured when newly transmitted data is scheduled.

The following describes in detail embodiments of this application with reference to the accompanying drawings.

Embodiments of this application are applied to a sidelink (SL) communication scenario. For example, some embodiments may be applied to an SL groupcast communication scenario, and some embodiments may be applied to an SL unicast communication scenario.

Network elements in embodiments of this application include a base station and UEs. In a specific data transmission process, the UEs are further classified into a data transmitter UE and a data receiver UE. In embodiments of this application, the data transmitter UE may be represented as a Tx UE, and is also referred to as a first terminal in some embodiments. The data receiver UE may be represented as an Rx UE, and is also referred to as a second terminal in some embodiments.

FIG. 8 shows an example of an SL groupcast communication scenario according to an embodiment of this application. A Tx UE represents a data transmitter UE, and an Rx UE represents a data receiver UE. The Tx UE communicates with a base station over a Uu interface, and the Tx UE communicates with the Rx UE over a PC5 interface. The Tx UE may work in a mode 1 or a mode 2. When the Tx UE works in the mode 1, there is a communication connection between the Tx UE and the base station, and the Tx UE may obtain an SL resource for PC5 communication from the base station. When the Tx UE works in the mode 2, the Tx UE may not have a serving base station, and the Tx UE determines an SL resource for data sending.

It should be noted that in embodiments of this application, data sent by the data transmitter UE may be understood as a media access control protocol data unit (MAC PDU), and the MAC PDU may also be understood as a transport block (transport block, TB).

For SL groupcast communication, the base station may schedule an SL resource for the data transmitter UE for SL communication, and the data transmitter UE may obtain the SL resource from the base station. Alternatively, the data transmitter UE may obtain the SL resource. The data transmitter UE may perform SL groupcast communication over the SL resource, to be specific, send SL groupcast data to a plurality of data receiver UEs in a communication group. The data receiver UE may receive the SL data from the data transmitter UE, and start a DRX-related timer if necessary.

For SL communication (such as SL groupcast or SL unicast), the DRX-related timer in embodiments of this application may include the following.

First timer: Duration of the first timer indicates duration that elapses before SL resource scheduling information used for retransmission is expected to be received. The duration of the first timer may also be understood as minimum duration that elapses before the SL resource scheduling information used for retransmission is expected to be received. In other words, the duration of the first timer may be understood as that the data receiver UE receives the SL resource allocated by the base station only after at least the minimum duration. In other words, after a HARQ feedback resource, the data receiver UE may receive the SL resource allocated by the base station only after at least the duration. Optionally, the duration may be represented by using a quantity of symbols, or may be represented by using another time unit. Optionally, the first timer may be an SL HARQ RTT timer.

For SL groupcast and unicast transmission, an SL resource used for retransmission is an SL resource used for HARQ retransmission. In other words, the duration of the first timer may be understood as indicating minimum duration that elapses before the SL resource used for HARQ retransmission is expected to be received.

Second timer: Duration of the second timer indicates duration that elapses before the SL resource scheduling information used for retransmission is received. The duration of the second timer may also be understood as maximum duration that elapses before the SL resource scheduling information used for retransmission is received; or may be understood as a corresponding period of time (the duration of the second timer) that elapses before the data receiver UE receives the SL resource scheduling information used for retransmission, after the first timer expires. For SL groupcast, the SL resource may be an SL resource used for HARQ retransmission. The SL resource scheduling information is carried in sidelink control information (sidelink control information, SCI), the SCI includes first-stage SCI and second-stage SCI, the first-stage SCI is carried on a physical sidelink control channel (physical sidelink control channel, PSCCH) resource, and the second-stage SCI is carried on a physical sidelink (sidelink) shared channel (physical sidelink shared channel, PSSCH) resource. Therefore, the duration of the second timer may be understood as sensing the PSCCH resource in at least the maximum duration to obtain the SL resource scheduling information, or may be understood as receiving the SCI in at least the maximum duration. Optionally, the duration may be represented by using a quantity of symbols, or may be represented by using another time unit. Optionally, the second timer may be a retransmission timer.

A running period of the second timer is a period of time from the start of the second timer until the duration of the second timer reaches.

On duration timer: Duration of the on duration timer indicates duration of an active period of time (On Duration) in a DRX cycle. A name of the timer is not limited in embodiments of this application.

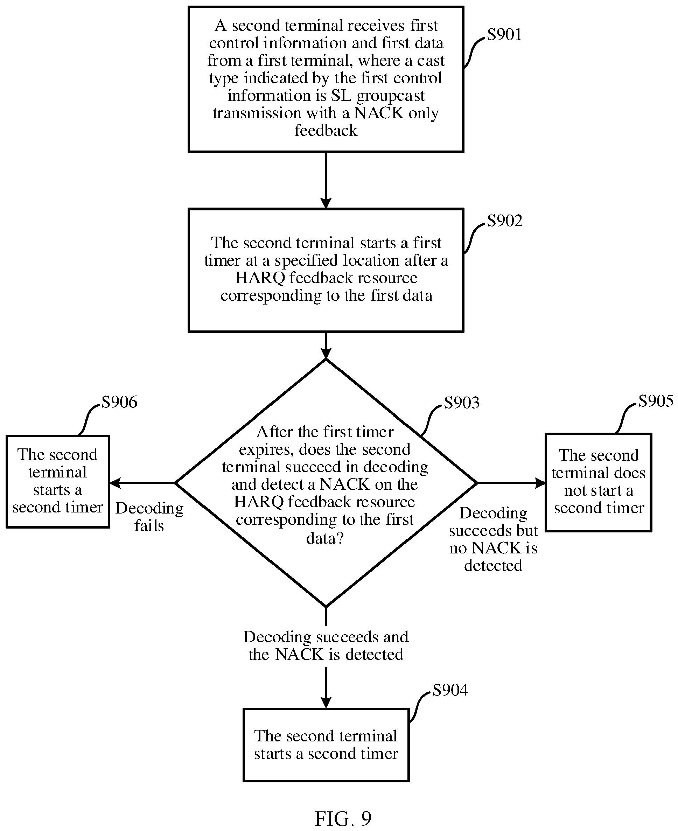

FIG. 9 is a schematic flowchart of a sidelink (SL) communication method according to an embodiment of this application.

The procedure may be applied to an SL groupcast option 1 scenario. To be specific, a data receiver UE needs to feed back a NACK only when decoding fails, and does not need to perform a HARQ feedback if decoding succeeds. In this embodiment, a first terminal is a data transmitter UE, a second terminal is the data receiver UE, and the first terminal and the second terminal belong to a same communication group. According to this embodiment, provided that there is one data receiver UE in the communication group feeding back a NACK, all data receiving UEs in the communication group start a second timer after a first timer expires.

As shown in FIG. 9, the procedure may include the following steps.

S901: The second terminal receives first control information and first data from the first terminal.

A cast type indicated by the first control information is SL groupcast transmission with a NACK only feedback. To be specific, the cast type indicated by the first control information is SL groupcast transmission with a HARQ feedback type of a HARQ option 1.

For example, the first control information may indicate SL process identification information, and the SL process identification information may include at least one of an SL process identifier (or referred to as an SL process number), cast type indication information, a source L1 identifier, and a destination L1 identifier. For example, in some embodiments, the SL process identification information may include the SL process identifier (or referred to as the SL process number), the cast type indication information, the source L1 identifier, and the destination L1 identifier. In some other embodiments, the SL process identification information may include the SL process identifier (or referred to as the SL process number), the source L1 identifier, and the destination L1 identifier. The cast type indication information indicates SL groupcast transmission with a NACK only feedback, or the cast type indication information indicates SL groupcast transmission. The source L1 identifier is a part of a source identifier (a source L2 identifier), for example, least significant eight bits of the source L2 identifier, and the destination L1 identifier is a part of a destination identifier (a destination L2 identifier), for example, least significant 16 bits of the destination L2 identifier.

For example, the first control information is SCI. The SCI may include first-stage SCI and second-stage SCI. The first-stage SCI is carried in a PSCCH resource, and the second-stage SCI and the first data are carried in a PSSCH resource. The first-stage SCI may indicate a location of the PSSCH resource, the second-stage SCI may indicate whether a HARQ feedback is required, and may indicate a specific HARQ feedback type for groupcast. The HARQ feedback type includes the HARQ option 1 and a HARQ option 2. In this embodiment of this application, the second-stage SCI indicates SL groupcast transmission with a NACK only feedback.

For example, the second-stage SCI may be in a first format (or referred to as a format 2-A) or a second format (or referred to as a format 2-B).

The second-stage SCI in the first format (format 2-A) may include the cast type indication information (cast type indication information) and HARQ feedback enabled/disabled indication information (HARQ feedback enabled/disabled indication information). For example, values of the cast type indication information include the following four types:
00 indicates broadcast (broadcast);
01 indicates groupcast (groupcast), and HARQ feedback information includes an ACK or a NACK, that is, indicates that an SL groupcast HARQ feedback type is the HARQ option 2;
10 indicates unicast (unicast); and
11 indicates groupcast (groupcast), and the HARQ feedback information includes only a NACK, that is, indicates that the SL groupcast HARQ feedback type is the HARQ option 1.

The second-stage SCI in the second format (format 2-B) includes HARQ feedback enabled/disabled indication information. The format is applied to a HARQ option 1 scenario (a NACK only feedback) or a HARQ feedback disabled scenario. If the HARQ feedback enabled/disabled indication information indicates to enable a HARQ feedback, a cast type indicated by the second-stage SCI in the second format (format 2-B) is SL groupcast transmission with a NACK only feedback.

Based on the foregoing SCI format, in S901, the second-stage SCI received by the second terminal may be in the first format (format 2-A), and the value of the cast type indication information included in the second-stage SCI is 11. Alternatively, the second-stage SCI received by the second terminal may be in the second format (format 2-B), and HARQ feedback enabled/disabled indication information included in the second-stage SCI indicates to enable the HARQ feedback.

S902: After receiving the first control information and the first data that are sent by the first terminal, the second terminal starts the first timer at a specified location after a HARQ feedback resource corresponding to the first data.

For example, the HARQ feedback resource corresponding to the first data is a PSFCH resource corresponding to the PSSCH resource used to transmit the first data. Optionally, the specified location after the HARQ feedback resource corresponding to the first data is the 1^{st} symbol after the PSFCH resource.

In an SL groupcast with a NACK only feedback scenario (that is, the HARQ option 1), a PSFCH resource used to carry the HARQ feedback information may be determined based on the PSSCH resource, and PSFCH resources determined by all data receiving terminals in the communication group for single transmission are the same.

S903: After the first timer expires, if the second terminal succeeds in decoding and detects a NACK on the HARQ feedback resource corresponding to the first data, the procedure proceeds to S904.

In the step, when the first timer expires, if the second terminal already succeeds in decoding before and already detects the NACK on the HARQ feedback resource corresponding to the first data before, it indicates that at least one UE in the data receiver UE other than the second terminal in the communication group fails to decode the first data and feeds back the NACK, and then the procedure proceeds to S904.

For example, the NACK transmitted on the HARQ feedback resource corresponding to the first data is a NACK fed back by the data receiver UE in the communication group for the failure of decoding the first data. PSFCH resources determined by all data receiver UEs in the communication group for transmission of a single time are the same. Therefore, in this embodiment of this application, all the data receiver UEs in the communication group may sense the PSFCH resource. Provided that any data receiver UE in the communication group feeds back a NACK on the PSFCH resource, both the data transmitter UE and another data receiver UE in the communication group may receive the NACK.

S904: The second terminal starts the second timer.

Optionally, the second terminal may start the second timer on the 1^{st} symbol after the first timer expires.

Further, the procedure shown in FIG. 9 may include the following step.

In S903, if the second terminal succeeds in decoding and detects no NACK on the HARQ feedback resource corresponding to the first data, it indicates that all the data receiver UEs in the communication group successfully decode the first data, and the procedure proceeds to S905. In S905, the second terminal does not start the second timer after the first timer expires.

Further, the procedure shown in FIG. 9 may include the following step.

In S903, if the second terminal fails in decoding, the procedure proceeds to S906. In S906, the second terminal sends the NACK on the HARQ feedback resource corresponding to the first data, and starts the second timer on the 1^{st} symbol after the first timer expires.

In the step, optionally, the second terminal may feed back the NACK on the PSFCH resource corresponding to the first data, and start the second timer on the 1^{st} symbol after the first timer expires. The PSFCH resource is determined based on the second-stage SCI carried on the PSSCH resource.

According to the procedure shown in FIG. 9, the first terminal (the data transmitter UE) sends the first data to the second terminal (the data receiver UE), and indicates that the cast type is SL groupcast transmission with a NACK only feedback (SL groupcast option 1). After receiving the first data and the first control information, the second terminal starts the first timer at the specified location after the HARQ feedback resource corresponding to the first data. After the first timer expires, if the second terminal successfully decodes the first data but detects the NACK on the HARQ feedback resource corresponding to the first data, it indicates that at least one data receiver UE in the communication group fails to decode the first data and starts the second timer after the first timer expires. Therefore, the second terminal also starts the second timer. When the HARQ feedback type is the HARQ option 1 (a NACK only feedback), data receiver UEs in the communication group feed back NACKs on the same HARQ feedback resource. In other words, all terminals in the communication group can sense the NACKs fed back on the HARQ feedback resource. In this way, provided that there is one data receiver UE in the communication group feeding back a NACK on the HARQ feedback resource corresponding to the first data, a terminal that fails in decoding and feeds back a NACK in the communication group starts the second timer, and a terminal that successfully decodes the first data also starts the second timer. In this way, for transmission of the first data, timers of all data receiver UEs in the communication group are maintained consistently, thereby ensuring data transmission reliability.

For example, when determining, based on the HARQ feedback information fed back by the data receiver UE, that at least one data receiver UE fails in decoding, to improve transmission efficiency, the data transmitter UE may send new data on an SL retransmission resource. In this case, because all the data receiver UEs (including the UE that succeeds in decoding and the UE that fails in decoding) in the communication group start the second timer, it can be ensured that both the UE that succeeds in decoding and the UE that fails in decoding can receive the new data, to improve system reliability.

Optionally, in some embodiments, the first timer and the second timer are associated with the SL process identification information indicated by the first control information.

For example, when starting the first timer, the second terminal actually starts the first timer for the SL process identification information indicated by the first control information, so that the first timer is associated with the SL process identification information indicated by the first control information. If receiving, on the HARQ feedback resource corresponding to the first data, a NACK sent by another terminal in the communication group for the first data, after the first timer expires, the second terminal starts the second timer for the SL process identification information indicated by the first control information, so that the second timer is associated with the SL process identification information indicated by the first control information. Therefore, provided that there is one terminal in the communication group failing to decode the first data and feeding back a NACK, the first timer and the second timer that are started by all the data receiver UEs in the communication group are associated with transmission of the first data. In this way, it can be ensured that for transmission of the first data, timers of all terminals in the communication group are maintained consistently, thereby avoiding a timer maintenance error.

Further, after receiving the first data and the first control information, the second terminal associates the first data with an SL process, where the SL process is used to process the first data. After successfully decoding the first data, the second terminal releases the SL process associated with the first data.

For example, after receiving the first data and the first control information, the second terminal selects an unoccupied SL process to process the first data, so that the SL process is associated with the first data. In this case, it is considered that the SL process is occupied. Further, a retransmission timer of the SL process is stopped after the first timer is started for the SL process. After the second terminal successfully decodes the first data and transmits the first data to a corresponding entity (for example, a MAC entity) for subsequent processing, the second terminal releases the SL process, so that the SL process can be occupied for other data transmission, but the first timer may continue to be run.

It should be understood that the unoccupied SL process is an SL process that is marked as unoccupied. The operation of releasing the SL process may include marking the SL process as unoccupied.

Optionally, in some other embodiments, the operation of starting the first timer by the second terminal includes: starting the first timer for a first SL process, where the first SL process is associated with the SL process identification information indicated by the first control information, and the first SL process is used to process the first data. Further, a retransmission timer of the first SL process is stopped after the first timer is started for the first SL process. The operation of starting the second timer by the second terminal includes: starting the second timer for the first SL process.

In this way, the second terminal (the data receiver UE) starts the first timer for the first SL process, and starts the second timer for the SL process. Because the first SL process is associated with the SL process identification information indicated by the first control information, the first timer and the second timer are associated with the SL process identification information indicated by the first control information, that is, associated with transmission of the first data. Therefore, it can be ensured that for transmission of the first data, timers of all terminals in the communication group are maintained consistently, thereby avoiding a timer maintenance error.

Further, if successfully decoding the first data, the second terminal may perform corresponding processing in one of the following manners (Manner 1, Manner 2, and Manner 3).

Manner 1: If successfully decoding the first data and receiving, on the HARQ feedback resource corresponding to the first data, a NACK fed back by a third terminal in the communication group, the second terminal continues to occupy the first SL process.

For example, after receiving the first data and the first control information, the second terminal starts the first timer for the first SL process. If the second terminal successfully decodes the first data but receives a NACK sent by another terminal in the communication group on the HARQ feedback resource corresponding to the first data, it indicates that there is still a data receiver UE failing to decode the first data in the communication group, and therefore the first SL process continues to be occupied. When the first timer expires, the second timer is started for the SL process.

In this way, provided that there is one terminal in the communication group failing to decode the first data and feeding back a NACK, all the data receiver UEs in the communication group maintain an occupied state of the SL process corresponding to the first data. In addition, because both the first timer and the second timer correspond to the SL process (in other words, both the first timer and the second timer are started for the SL process), it can be ensured that the first timer and the second timer that are started by all the receiving terminals in the communication group are associated with the SL process used to process the first data, thereby avoiding a timer maintenance error.

Manner 2: If successfully decoding the first data and detecting no NACK on the HARQ feedback resource corresponding to the first data, the second terminal releases the first SL process. That is, it is considered that the first SL process is not occupied.

For example, after receiving the first data and the first control information, the second terminal starts the first timer for the first SL process. If the second terminal successfully decodes the first data and receives no NACK sent by another terminal in the communication group on the HARQ feedback resource corresponding to the first data, it indicates that all the data receiving terminals in the communication group successfully decode the first data, and therefore, the first SL process is released, so that the SL process can be used for other data processing.

Manner 3: If successfully decoding the first data, the second terminal releases the first SL process. To be specific, after successfully decoding the first data, the second terminal releases the first SL process regardless of whether the second terminal detects the NACK on the HARQ feedback resource corresponding to the first data.

After that, after the second terminal receives second data and second control information (where the second control information indicates groupcast transmission with a NACK only feedback), the second terminal may select an unoccupied second SL process, and associate the second SL process with SL process identification information indicated by the second control information, where the second process is used to process the second data. Then, if determining that the second data is retransmitted data of the first data, the second terminal releases the second SL process. Because the second terminal has successfully decoded the first data, if it is determined that the second data is retransmitted data of the first data, the second data may no longer be processed. In this way, the second SL process used to process the second data may be released.

Optionally, in some embodiments, in a scenario in which the first terminal (the data transmitter UE) reserves a plurality of SL resources, the second terminal (the data receiver UE) may perform an operation in the last retransmission process based on the procedure shown in FIG. 9.

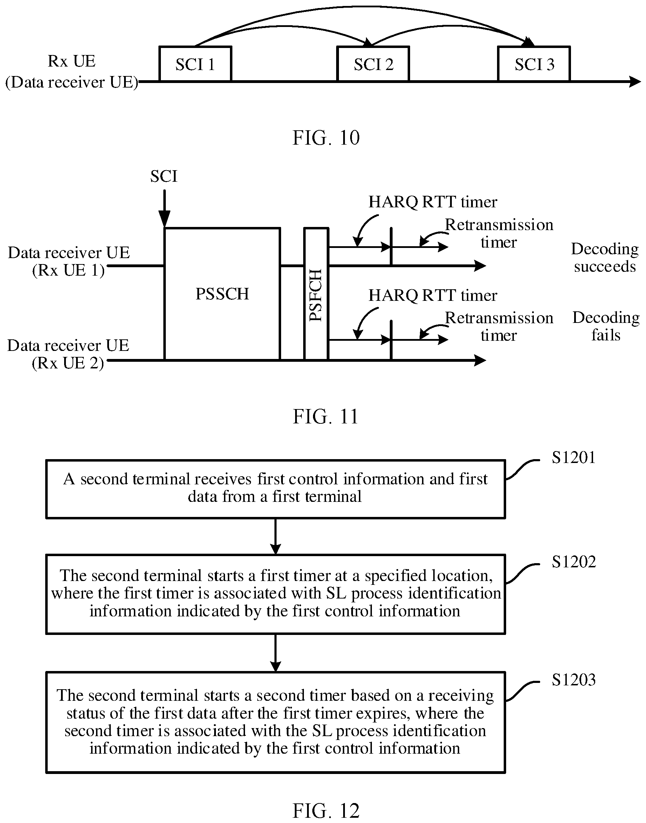

In a scenario in which the data transmitter UE reserves a plurality of SL resources for one piece of data, previous SCI may indicate a resource location of subsequent SCI. As shown in FIG. 10, SCI 1, SCI 2, and SCI 3 are three SL resources reserved for transmission of one piece of data. The SCI 1 may indicate resource locations of the SCI 2 and the SCI 3, and the SCI 2 may indicate the resource location of the SCI 3. A transmission resource indicated by the previous SCI is retransmission for previous transmission. As shown in the figure, transmission corresponding to the SCI 2 and transmission corresponding to the SCI 3 are both retransmission, and the resource locations are respectively indicated by the previous SCI. In other words, the data receiver UE can know, based on the previous SCI, a location in which retransmission occurs.

In the scenario in which the data transmitter UE reserves a plurality of SL resources, in the procedure shown in FIG. 9, in S901, the first control information received by the second terminal does not indicate a resource location of the second control information, and the second control information indicates a retransmission resource of the first data. It may be understood that an SL resource used by the first control information and the first data is the last one of one or more reserved SL resources. Alternatively, it may be understood that current transmission is the last transmission, and the last transmission may be understood as that first control information corresponding to the transmission does not indicate a resource location of next control information (the second control information).

The scenario shown in FIG. 10 is used as an example. After the second terminal receives the SCI 1, the SCI 1 indicates the resource location of the SCI 2. It indicates that subsequent data retransmission still exists, and the second terminal can learn, based on the SCI 1, time at which retransmission occurs. Therefore, a corresponding DRX timer (including the first timer and the second timer) is not started. Similarly, the second terminal does not start a corresponding DRX timer after receiving the SCI 2. After receiving the SCI 3, the second terminal determines that the SCI does not indicate a resource location of next SCI. It indicates that current transmission is the last transmission, and the procedure shown in FIG. 9 is performed.

It should be noted that in this embodiment of this application, if a resource pool to which the plurality of SL resources reserved by the data transmitter UE belong does not support resource preemption (preemption), SL communication is performed according to the method described in the foregoing embodiment, to be specific, a corresponding timer is started for the last retransmission process (where for details, refer to the procedure shown in FIG. 9). If a resource pool to which the plurality of SL resources reserved by the data transmitter UE belong supports resource preemption, a corresponding timer (including the first timer and the second timer) may be started for each SL resource. A start moment of a corresponding timer described in this embodiment of this application may be reused for the start moment of the corresponding timer. For example, the first timer may be started on the 1^{st} symbol after a resource carrying the first-stage SCI, the 1^{st} symbol after the first control information is completely received, the 1^{st} symbol after a resource carrying the first data, or the 1^{st} symbol after the HARQ feedback resource corresponding to the first data. The second timer is started on the 1^{st} symbol after the first timer expires.

It may be understood that, if the resource pool to which the plurality of SL resources reserved by the data transmitter UE belong is a mode 1 resource pool (where in other words, a base station performs SL resource scheduling for data transmission for the data transmitter UE based on the resource pool) or a mode 2 resource pool (where in other words, the data transmitter UE performs SL resource scheduling for data transmission based on the resource pool) and does not support resource preemption, it may be understood that the resource pool does not support resource preemption. If the resource pool to which the plurality of SL resources reserved by the data transmitter UE belong is a mode 2 resource pool and supports resource preemption, it may be understood that the resource pool supports resource preemption.

Based on the foregoing implementation, for a scenario in which a plurality of data transmitter UEs (first terminals) reserve a plurality of SL resources, if the first control information currently received by the second terminal does not indicate a resource location of control information used to schedule the SL retransmission resource, that is, if an SL resource indicated by the first control information is the last retransmission resource, the SL communication method (to be specific, after the first timer started by the second terminal expires, although the second terminal successfully decodes the first data, if the second terminal receives, on the HARQ feedback resource corresponding to the first data, a NACK fed back by another terminal in the communication group, the second terminal also needs to start the second timer) provided in the foregoing embodiment of this application is performed. In one aspect, in a data retransmission process except the last retransmission, if succeeding in decoding, the data receiving terminal (the second terminal) does not start the second timer after the first timer expires, to save power consumption of the terminal. In another aspect, in the last retransmission process, provided that there is one terminal in the communication group feeding back a NACK, all the data receiver UEs in the communication group start the second timer after the first timer expires. In this way, it is ensured that timers of all data receiver UEs in the communication group are maintained consistently. Further, when the data transmitter UE (the first terminal) transmits new data by using the last retransmission resource, a terminal that succeeds in decoding can also receive the new data, to ensure data transmission reliability.

According to the foregoing embodiment, FIG. 11 is a schematic diagram in which a data transmitter UE (a Tx UE) sends groupcast data to data receiver UEs (a Rx UE 1 and a Rx UE 2) in a communication group according to an embodiment of this application. As shown in the figure, the Rx UE 1 and the Rx UE 2 receive first control information (SCI) and first data (SL groupcast data) from the Tx UE, where the SCI includes first-stage SCI and second-stage SCI. If SL DRX is enabled, the Rx UE 1 and the Rx UE 2 determine, based on the second-stage SCI, that the first data requires a HARQ feedback, and a HARQ feedback type is a HARQ option 1 (to be specific, the data receiver UE needs to feed back a NACK only when decoding fails, and does not perform a HARQ feedback if decoding succeeds). In this case, the Rx UE 1 and the Rx UE 2 each determine a PSFCH resource based on a PSSCH resource indicated by the first-stage SCI, start, on the 1^{st} symbol after the PSFCH resource, an SL HARQ RTT timer for an SL process corresponding to the first data, and stop a retransmission timer of the SL process. After the SL HARQ RTT timer expires, if the Rx UE 1 successfully decodes data (the first data) of the SL process, but detects a NACK (where the NACK is fed back by the Rx UE 2 due to a decoding failure) on the PSFCH resource corresponding to the first data, the retransmission timer is started for the SL process on the 1^{st} symbol after the SL HARQ RTT timer expires.

Embodiments of this application further provide a sidelink (SL) communication method, which is applicable to an SL groupcast transmission scenario and an SL unicast transmission scenario.

FIG. 12 is a schematic flowchart of an SL communication method according to an embodiment of this application. The procedure is applicable to SL groupcast transmission or SL unicast transmission. In the procedure, a first terminal is a data transmitter UE, and a second terminal is a data receiver UE.

As shown in FIG. 12, the procedure may include the following steps.

S1201: The second terminal receives first control information and first data from the first terminal.

In the step, for an SL groupcast transmission scenario, the first terminal sends the first control information and the first data to a terminal in a communication group to which the first terminal belongs. For an SL unicast scenario, the first terminal sends the first control information and the first data to the second terminal.

Optionally, a cast type indicated by the first control information may include one of the following:
SL unicast transmission;
SL groupcast transmission;
SL groupcast transmission with a NACK only feedback; or
SL groupcast transmission with a feedback of at least one of a NACK and an ACK.

For information included in the first control information and an information organization manner, refer to the related descriptions in the foregoing embodiment.

For example, the first control information is SCI, the SCI includes first-stage SCI and second-stage SCI, and the second-stage SCI may indicate the cast type. In this embodiment of this application, the cast type indicated by the second-stage SCI and an indication method include one of the following methods (Method 1, Method 2, and Method 3).

Method 1: Cast type indication information in the second-stage SCI indicates groupcast transmission with a NACK only feedback. For example, the second-stage SCI is in a first format (format 2-A), and a value of the cast type indication information in the second-stage SCI is 11, which indicates SL groupcast transmission with a NACK only feedback.

Method 2: The second-stage SCI is in a second format (format 2-B), and HARQ feedback enabled/disabled indication information in the second-stage SCI indicates to enable a HARQ feedback.

Method 3: The second-stage SCI is in a first format, and cast type indication information in the second-stage SCI indicates unicast transmission.

S1202: After receiving the first control information and the first data that are sent by the first terminal, the second terminal starts a first timer at a specified location, where the first timer is associated with SL process identification information indicated by the first control information.

Optionally, the second terminal may start the first timer at one of the following locations:
the 1^{st} symbol after a resource carrying first-stage control information, where the first control information includes the first-stage control information;
the 1^{st} symbol after the first control information is completely received;
the 1^{st} symbol after a resource carrying the first data; or
the 1^{st} symbol after a HARQ feedback resource corresponding to the first data.

The HARQ feedback resource corresponding to the first data may be understood as a HARQ feedback resource corresponding to a PSSCH resource carrying the first data, and the HARQ feedback resource may be understood as a PSFCH resource.

S 1203 : The second terminal starts a second timer based on a receiving status of the first data after the first timer expires, where the second timer is associated with the SL process identification information indicated by the first control information.

The receiving status of the first data may include: The first data is successfully decoded, or the first data fails to be decoded.

In the step, if the cast type indicated by the first control information is SL unicast transmission, SL groupcast transmission, or SL groupcast transmission with a feedback of one of a NACK and an ACK, and if failing to decode the first data, the second terminal starts the second timer after the first timer expires. For example, the second terminal may start the second timer on the 1^{st} symbol after the first timer expires. If successfully decoding the first data, the second terminal does not start the second timer after the first timer expires.

If the cast type indicated by the first control information is SL groupcast transmission with a NACK only feedback, the second terminal may successfully decode the first data, receive the NACK on the HARQ feedback resource corresponding to the first data, and start the second timer after the first timer expires. Alternatively, if failing to decode the first data, the second terminal starts the second timer after the first timer expires. The first terminal and the second terminal are terminals in the same communication group. For example, the second terminal may start the second timer on the 1^{st} symbol after the first timer expires.

Optionally, in some embodiments, for a scenario in which the first terminal (a data transmitter UE) reserves a plurality of SL resources, in the procedure shown in FIG. 12, the first control information received by the second terminal does not indicate a resource location of second control information, and the second control information indicates a retransmission resource of the first data. For example, after the second terminal receives the SCI (the first control information), if it is determined that the SCI does not indicate a resource location of next SCI (the second control information), it indicates that current transmission is the last transmission, and the procedure shown in FIG. 12 is performed. If it is determined that the SCI indicates a resource location of next SCI (the second control information), it indicates that subsequent data retransmission still exists, and the second terminal does not start a corresponding DRX timer (including the first timer and the second timer). For a specific implementation process, refer to the related descriptions in the procedure shown in FIG. 9. Optionally, in the scenario in which the data transmitter UE reserves a plurality of SL resources, SL communication methods may be different based on whether a resource pool to which the SL resources belong supports preemption. For a specific implementation, refer to the related content in the foregoing embodiment.

According to the procedure shown in FIG. 12, after receiving the first data and the first control information that are sent by the first data terminal (the data transmitter UE), the second terminal (the data receiver UE) starts the first timer on a corresponding occasion, and starts the second timer based on the receiving status of the first data (where for example, in an SL unicast transmission scenario, the second terminal fails in decoding, or in an SL groupcast transmission scenario, provided that there is one data receiver UE in the communication group feeding back a NACK) after the first timer expires. Because both the first timer and the second timer are associated with the SL process identification information indicated by the first control information, both the first timer and the second timer are associated with transmission of the first data, so that timers are maintained consistently, thereby avoiding a timer maintenance error.

Embodiments of this application further provide a sidelink (SL) communication method, which is applicable to an SL groupcast scenario and an SL unicast scenario.

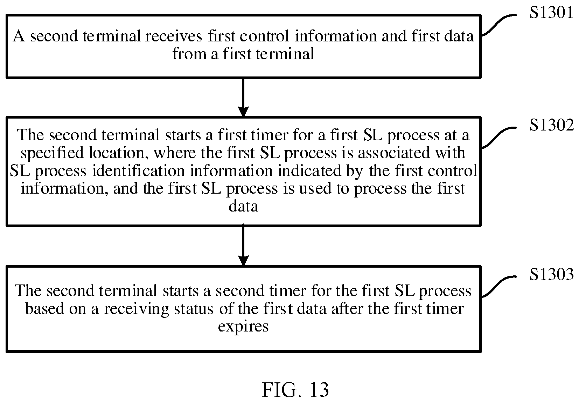

FIG. 13 is a schematic flowchart of an SL communication method according to an embodiment of this application. The procedure is applicable to SL groupcast or SL unicast. In the procedure, a first terminal is a data transmitter UE, and a second terminal is a data receiver UE.

As shown in FIG. 13, the procedure may include the following steps.

S1301: The second terminal receives first control information and first data from the first terminal.

In the step, for an SL groupcast scenario, the first terminal sends the first control information and the first data to a terminal in a communication group to which the first terminal belongs, where the communication group includes the second terminal that serves as the data receiver UE. For an SL unicast scenario, the first terminal sends the first control information and the first data to the second terminal.

For example, a cast type indicated by the first control information includes one of the following:
SL unicast transmission;
SL groupcast transmission;
SL groupcast transmission with a NACK only feedback; or
SL groupcast transmission with a feedback of at least one of a NACK and an ACK.

For specific implementation of the step, refer to the related descriptions in the procedure shown in FIG. 12.

S1302: After receiving the first control information and the first data that are sent by the first terminal, the second terminal starts a first timer for a first SL process at a specified location, where the first SL process is associated with SL process identification information indicated by the first control information, and the first SL process is used to process the first data.

Optionally, the second terminal may start the first timer at one of the following locations:
the 1^{st} symbol after a resource carrying first-stage control information, where the first control information includes the first-stage control information;
the 1^{st} symbol after the first control information is completely received;
the 1^{st} symbol after a resource carrying the first data; or
the 1^{st} symbol after a HARQ feedback resource corresponding to the first data.

S1303: The second terminal starts a second timer for the first SL process based on a receiving status of the first data after the first timer expires.

In the step, if the cast type indicated by the first control information is SL unicast transmission, SL groupcast transmission, or SL groupcast transmission with a feedback of one of a NACK and an ACK, and if failing to decode the first data, the second terminal starts the second timer after the first timer expires. For example, the second terminal may start the second timer on the 1^{st} symbol after the first timer expires. If successfully decoding the first data, the second terminal does not start the second timer after the first timer expires.

If the cast type indicated by the first control information is SL groupcast transmission with a NACK only feedback, the second terminal may successfully decode the first data, receive the NACK on the HARQ feedback resource corresponding to the first data, and start the second timer after the first timer expires. Alternatively, if failing to decode the first data, the second terminal starts the second timer after the first timer expires. The first terminal and the second terminal are terminals in the same communication group. For example, the second terminal may start the second timer on the 1^{st} symbol after the first timer expires.

Optionally, in an SL groupcast transmission with a NACK only feedback scenario, if successfully decoding the first data and receiving the NACK on the HARQ feedback resource corresponding to the first data, the second terminal continues to occupy the first SL process. If successfully decoding the first data and detecting no NACK on the HARQ feedback resource, the second terminal releases the first SL process.

Optionally, after successfully decoding the first data, the second terminal may release the first SL process. After that, after receiving second data and second control information, the second terminal associates a second SL process with SL process identification information indicated by the second control information, where the second process is used to process the second data. Then, if determining that the second data is retransmitted data of the first data, the second terminal releases the second SL process.

Optionally, in some embodiments, for a scenario in which the first terminal (the data transmitter UE) reserves a plurality of SL resources, in the procedure shown in FIG. 13, the first control information received by the second terminal does not indicate a resource location of the second control information, and the second control information indicates a retransmission resource of the first data. For example, after the second terminal receives SCI (the first control information), if it is determined that the SCI does not indicate a resource location of next SCI (the second control information), it indicates that current transmission is the last transmission, and the procedure shown in FIG. 13 is performed. If it is determined that the SCI indicates a resource location of next SCI (the second control information), it indicates that subsequent data retransmission still exists, and the second terminal does not start a corresponding DRX timer (including the first timer and the second timer). For a specific implementation process, refer to the related descriptions in the procedure shown in FIG. 9. Optionally, in the scenario in which the data transmitter UE reserves a plurality of SL resources, SL communication methods may be different based on whether a resource pool to which the SL resources belong supports preemption. For a specific implementation, refer to the related content in the foregoing embodiment.

According to the procedure shown in FIG. 13, after receiving the first data and the first control information that are sent by the first data terminal (the data transmitter UE), the second terminal (the data receiver UE) starts the first timer for the first SL process on a corresponding occasion, and starts the second timer for the first SL process based on the receiving status of the first data (where for example, in an SL unicast transmission scenario, the second terminal fails in decoding, or in an SL groupcast transmission scenario, provided that there is one data receiver UE in the communication group feeding back a NACK) after the first timer expires. Because the first SL process is associated with the SL process identification information indicated by the first control information, both the first timer and the second timer are associated with transmission of the first data, so that timers are maintained consistently, thereby avoiding a timer maintenance error.

Embodiments of this application further provide an SL groupcast communication method. The method is applicable to a groupcast HARQ feedback type of a HARQ option 1 (a NACK only feedback), or applicable to a groupcast HARQ feedback type of a HARQ option 2 (a feedback of a NACK or an ACK).

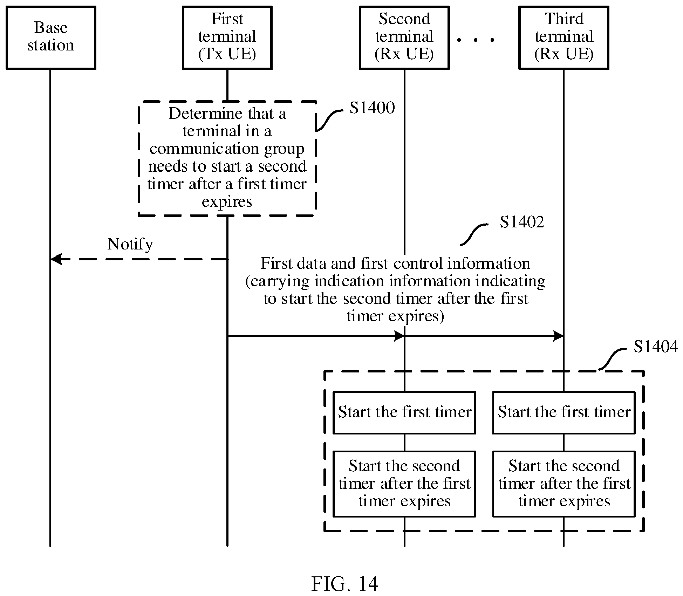

FIG. 14 is a schematic flowchart of an SL groupcast communication method according to an embodiment of this application. In this embodiment, a first terminal is a data transmitter UE, a second terminal and a third terminal are data receiver UEs, and the first terminal, the second terminal, and the third terminal belong to a same communication group (or referred to as a groupcast group). According to this embodiment, regardless of whether decoding succeeds or fails, both the data receiver UEs in the communication group start a second timer after a first timer expires.

As shown in FIG. 14, the procedure may include the following steps.

S1402: The first terminal sends first data and first control information to a terminal in the communication group.

The first control information includes indication information, and the indication information indicates the terminal in the communication group to start the second timer after the first timer expires. It may be understood that the indication information indicates to always start the second timer. The always starting the second timer means that when the first timer expires, the second timer is started without determining whether decoding succeeds. It may be understood that, the always starting the second timer may also be understood as starting the second timer each time.

Optionally, the indication information may be information carried in second-stage SCI, that is, may be set in the second-stage SCI.

Optionally, in some embodiments, if the first control information carries the indication information, it indicates to always start the second timer. If the first control information does not carry the indication information, the second timer is still started according to a conventional method. That is, the second timer is started only when decoding fails.

Optionally, in some other embodiments, it may be determined, based on a value of the indication information carried in the first control information, whether to always start the second timer. For example, the indication information may be 1-bit information. When a value of the 1-bit information is 1, it indicates to always start the second timer. When a value of the 1-bit information is 0, it indicates to start the second timer according to the conventional method. To be specific, the second timer is started only when decoding fails.

In the step, the first control information sent by the first terminal may indicate SL groupcast transmission with a NACK only feedback (that is, an SL groupcast HARQ feedback type is a HARQ option 1), the first control information indicates SL groupcast transmission with a feedback of one of a NACK and an ACK (that is, the SL groupcast HARQ feedback type is a HARQ option 2), or the first control information indicates SL groupcast transmission. For related descriptions (including content included in the first control information, an organization manner, a transmission manner, a method for indicating a cast type, and the like) of the first control information, refer to the related content in the foregoing embodiment.

Optionally, before S 1402, the method may further include the following steps.

S 1400: The first terminal determines that the terminal in the communication group needs to be indicated to start the second timer after the first timer expires. For example, if the first terminal expects that all data receiver UEs in the communication group are in an active state, to allow the first terminal to schedule newly transmitted data, the first terminal may send the indication information. Further, if determining to send the indication information, the first terminal may further notify a base station that the terminal in the communication group has been indicated to start the second timer after the first timer expires. In this way, in a scenario in which the first terminal works in a mode 1 (to be specific, an SL resource used by the data transmitter UE to perform data transmission is scheduled by the base station), the base station may learn that the terminal in the communication group has been indicated to start the second timer after the first timer expires, so that the terminal is in the active state. In this way, new data transmission can be scheduled during running of the second timer, so that a terminal that succeeds in decoding can receive the new data. Further, in one aspect, system transmission efficiency can be improved, and in another aspect, data transmission reliability can be ensured.

Optionally, the first terminal may alternatively determine, based on an indication of the base station, that the terminal in the communication group needs to be indicated to start the second timer after the first timer expires.

S1404: After receiving the first control information and the first data that are sent by the first terminal, the second terminal in the communication group starts the second timer based on the indication information after the first timer expires.

Optionally, the second terminal may start the first timer at a specified location after a HARQ feedback resource corresponding to the first data, for example, start the first timer on the 1^{st} symbol after the HARQ feedback resource corresponding to the first data.

Optionally, the second terminal may start the second timer on the 1^{st} symbol after the first timer expires.

Optionally, the indication information further indicates a start moment of the second timer. For example, the start moment may be an N^{th} symbol after a PSFCH resource, a PSCCH resource, or a PSSCH resource, or an N^{th} symbol slot after the PSFCH resource, the PSCCH resource, or the PSSCH resource, where N is an integer greater than or equal to 1. The second terminal may start the second timer based on the start moment indicated by the indication information.

Optionally, in some embodiments, the first timer and the second timer are associated with SL process identification information indicated by the first control information. For related descriptions of the SL process identification information, refer to the foregoing embodiment. For example, the SL process identification information may include an SL process identifier, cast type indication information, a source L1 identifier, and a destination L1 identifier. The cast type indication information indicates SL groupcast transmission with a NACK only feedback, the cast type indication information indicates SL groupcast transmission with a feedback of one of a NACK and an ACK, or the cast type indication information indicates SL groupcast transmission. Further, the second terminal may associate the first data with an SL process, where the SL process is used to process the first data. When successfully decoding the first data, the second terminal releases the SL process associated with the first data.

Optionally, in some other embodiments, the second terminal starts the first timer for a first SL process, where the first SL process is associated with the SL process identification information indicated by the first control information, and the first SL process is used to process the first data. The operation of starting the second timer by the second terminal includes: The second terminal starts the second timer for the first SL process. Further, the second terminal may perform one of the following operations.

Operation 1: If successfully decoding the first data and receiving, on the HARQ feedback resource corresponding to the first data, a NACK fed back by the third terminal in the communication group, the second terminal continues to occupy the first SL process.

Operation 2: If successfully decoding the first data, the second terminal releases the first SL process. After that, after receiving second data and second control information, the second terminal associates a second SL process with SL process identification information indicated by the second control information, where the second process is used to process the second data. Then, if determining that the second data is retransmitted data of the first data, the second terminal releases the second SL process.

Optionally, during running of the second timer, the first terminal may send new data to the terminal in the communication group.

Optionally, in some embodiments, for a scenario in which the first terminal (the data transmitter UE) reserves a plurality of SL resources, in the procedure shown in FIG. 14, the first control information received by the second terminal does not indicate a resource location of the second control information, and the second control information indicates a retransmission resource of the first data. For example, after the second terminal receives the SCI (the first control information), if it is determined that the SCI does not indicate a resource location of next SCI (the second control information), it indicates that current transmission is the last transmission, and the procedure shown in FIG. 14 is performed. If it is determined that the SCI indicates a resource location of next SCI (the second control information), it indicates that subsequent data retransmission still exists, and the second terminal does not start a corresponding DRX timer (including the first timer and the second timer). For a specific implementation process, refer to the related descriptions in the procedure shown in FIG. 9. Optionally, in the scenario in which the data transmitter UE reserves a plurality of SL resources, SL communication methods may be different based on whether a resource pool to which the SL resources belong supports preemption. For a specific implementation, refer to the related content in the foregoing embodiment.

The procedure shown in FIG. 14 may be applied to scenarios in which SL groupcast feedback types are the HARQ option 1 and the HARQ option 2. In the HARQ Option 2 scenario, in the communication group, for same data, different data receiver UEs use different HARQ feedback resources (where for example, PSFCH resources determined by different data receiver UEs are aligned in time domain, but PSFCH resources of different UEs are different in frequency domain). Therefore, one data receiver UE cannot sense a NACK sent by another data receiver UE on the HARQ feedback resource. However, according to the procedure shown in FIG. 14, the data transmitter UE indicates the data receiver UE in the communication group to start the second timer after the first timer expires, so that the data receiver starts the second timer even if decoding succeeds. In this way, regardless of whether the data receiver UE in the communication group successfully decodes the first data, the data receiver UE in the communication group starts the second timer after the first timer expires. Therefore, for transmission of the first data, timers of all data receiver UEs in the communication group are maintained consistently, thereby ensuring data transmission reliability.

For example, to improve system transmission efficiency, the data transmitter sends new data on an SL retransmission resource. Because all the data receiver UEs (including a UE that succeeds in decoding and a UE that fails in decoding) in the communication group start the second timer, it can be ensured that the UE that succeeds in decoding can also receive the new data, to improve system reliability.

Embodiments of this application further provide an SL groupcast communication method. The method is similar to the method shown in FIG. 14. Herein, a second timer may be an activity timer. A first terminal (a data transmitter UE) may indicate, by using indication information, a data receiver UE in a communication group to always start the activity timer. The indication information may be carried in first control information. It may be understood that the indication information may be second-stage SCI in the first control information.

For example, in some embodiments, the activity timer may be started after a first timer expires. For example, after receiving first data and the first control information (where the first control information carries the indication information indicating to always start the activity timer), the data receiver UE starts the first timer on the 1^{st} symbol after a HARQ feedback resource (a PSFCH resource) corresponding to the first data. After the first timer expires, regardless of whether the data receiver UE successfully decodes the first data, the data receiver UE starts the activity timer on the 1^{st} symbol after the first timer expires.

In some other embodiments, the activity timer may alternatively be started after the HARQ feedback resource (the PSFCH resource) corresponding to the first data. That is, the activity timer is started without starting the first timer.

Optionally, the indication information further indicates a start moment of the activity timer. For example, the start moment may be an N^{th} symbol after the PSFCH resource, a PSCCH resource, or a PSSCH resource, or an N^{th} symbol slot after the PSFCH resource, the PSCCH resource, or the PSSCH resource, where N is an integer greater than or equal to 1. The data receiver UE may start the activity timer based on the start moment indicated by the indication information.

Optionally, if the first control information does not carry the indication information, the data receiver UE starts the activity timer when decoding fails.

Optionally, the activity timer may be replaced by another timer.

Embodiments of this application further provide an SL groupcast communication method by combining the SL groupcast communication method shown in FIG. 9 and the SL groupcast communication method shown in FIG. 14. To be specific, if a data transmitter UE indicates to use a HARQ option 1 (to be specific, a data receiver UE feeds back a NACK when decoding fails, and does not send HARQ feedback information if decoding succeeds), the data receiver UE performs related steps in the procedure shown in FIG. 9. If a data transmitter UE indicates to use a HARQ option 2 (to be specific, a data receiver UE feeds back a NACK when decoding fails, and feeds back an ACK when decoding succeeds), the data receiver UE performs related steps in the procedure shown in FIG. 14. After receiving control information and data from the data transmitter UE, the data receiver UE needs to determine a HARQ feedback type indicated by the control information, to choose to perform a corresponding operation.

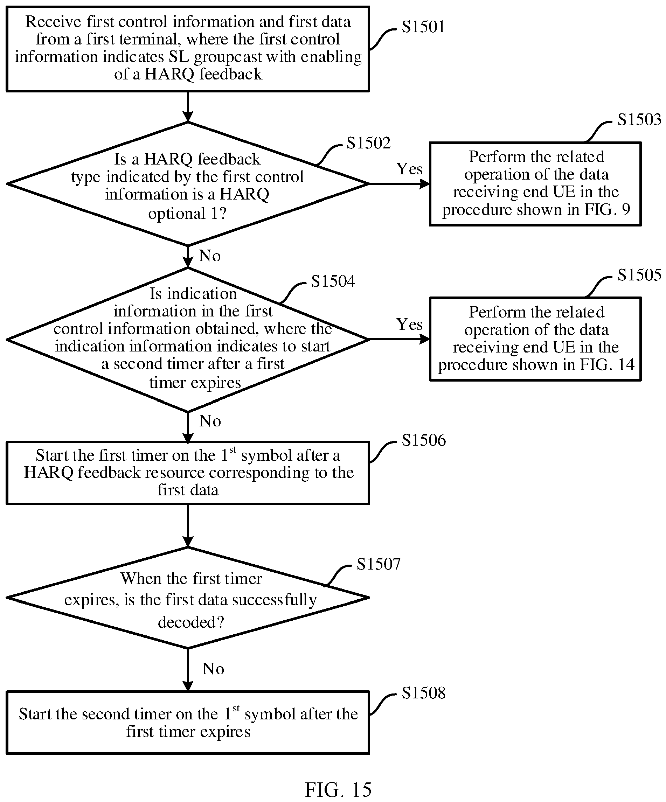

FIG. 15 is a schematic flowchart of an SL groupcast communication method according to an embodiment of this application. As shown in the figure, the procedure may include the following steps.

S1501: A second terminal receives first control information and first data from a first terminal.

The first control information indicates SL groupcast with enabling of a HARQ feedback.

In the step, the first terminal may flexibly determine a HARQ feedback type based on a requirement.

The first terminal may indicate the HARQ feedback type via the first control information. If the first terminal determines to use a HARQ option 2, indication information may be carried in the first control information, to indicate to start a second timer after a first timer expires.

For related descriptions (including content included in the first control information, an organization manner, a transmission manner, a method for indicating a cast type, and the like) of the first control information, refer to the related content in the foregoing embodiment.

S1502: The second terminal determines the HARQ feedback type based on the first control information. If the HARQ feedback type is a HARQ option 1, the procedure proceeds to S1503; otherwise, the procedure proceeds to S1504.

S1503: The second terminal performs the related operation in the procedure shown in FIG. 9.

For example, the second terminal starts the first timer on the 1^{st} symbol after a HARQ feedback resource (a PSFCH resource) corresponding to the first data. After the first timer expires, if successfully decoding the first data and receiving, on the HARQ feedback resource, a NACK fed back by another data receiver UE in a communication group, the second terminal starts the second timer.

S1504: If the second terminal obtains the indication information in the first control information (where the indication information indicates to start the second timer after the first timer expires), the procedure proceeds to S1505; otherwise, the procedure proceeds to S1506.

S1505: The second terminal performs the related operation in the procedure shown in FIG. 14.

The second terminal starts the second timer after the first timer expires.

For example, the second terminal starts the first timer on the 1^{st} symbol after the HARQ feedback resource (the PSFCH resource) corresponding to the first data, and starts the second timer on the 1^{st} symbol after the first timer expires.

S1506: The second terminal starts the first timer on the 1^{st} symbol after the HARQ feedback resource corresponding to the first data.

S 1507: When the first timer expires, if the second terminal fails to decode the first data, the procedure proceeds to S1508.

S1508: The second terminal starts the second timer on the 1^{st} symbol after the first timer expires.

It should be noted that for specific implementations of related steps in the procedure shown in FIG. 15, refer to the related content in the foregoing embodiment, and details are not repeated herein.

Embodiments of this application further provide an SL groupcast communication method, and the method may be applied to a data transmitter UE.

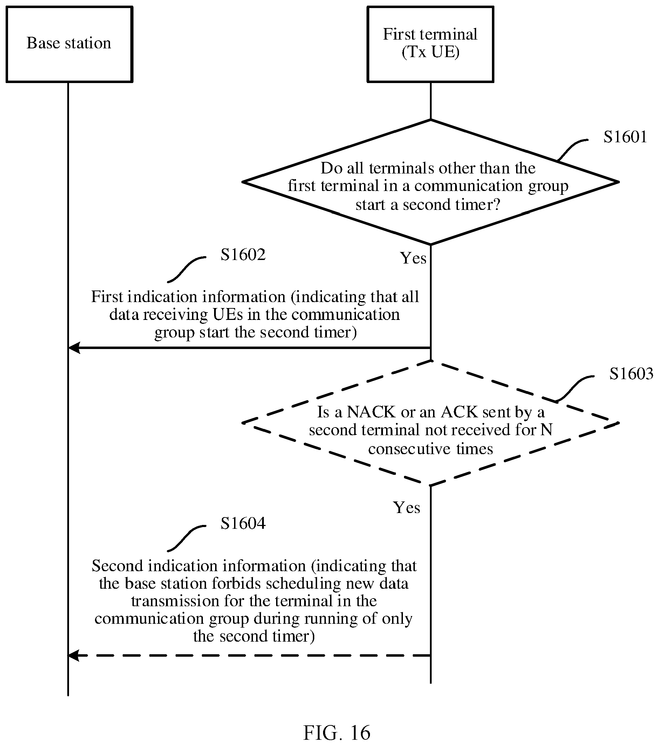

FIG. 16 is a schematic flowchart of an SL groupcast communication method applied to a data transmitter according to an embodiment of this application. The procedure may be applied to an SL groupcast scenario. In this embodiment, a first terminal is a data transmitter UE.

As shown in FIG. 16, the procedure may include the following steps.

S1601: The first terminal determines whether all terminals other than the first terminal in a communication group to which the first terminal belongs start a second timer.

In the step, that the first terminal determines whether all data receiver UEs in the communication group start the second timer may include the following cases.

Case 1: If a HARQ feedback type used by the first terminal is a HARQ option 1 (a NACK only feedback), and the data receiver UE uses the SL groupcast communication method shown in FIG. 9, provided that the first terminal receives a NACK sent by one data receiver UE in the communication group, it may be determined that all the data receiver UEs in the communication group start the second timer after a first timer expires.

Case 2: If a HARQ feedback type used by the first terminal is a HARQ option 1, and the data receiver UE uses a conventional SL groupcast communication method, when receiving NACKs fed back by all the data receiver UEs in the communication group, the first terminal determines that all the data receiver UEs in the communication group start the second timer after a first timer expires. The conventional SL groupcast communication solution is understood as that after the first timer expires, if decoding fails, the data receiver UE starts the second timer.

Case 3: If a HARQ feedback type used by the first terminal is a HARQ option 2, provided that the first terminal receives no ACK sent by the data receiver UE in the communication group, it may be determined that all the data receiver UEs in the communication group start the second timer after a first timer expires. Specifically, the following cases may be included: All the data receiver UEs feed back NACKs; none of feedback information of all the data receiver UE is received by the first terminal; or some data receiver UEs feed back NACKs, and feedback information of the remaining data receiver UEs is not received by the first terminal.

S1602: If determining that all the terminals other than the first terminal in the communication group start the second timer, the first terminal sends first indication information to a base station, where the first indication information indicates that all the terminals other than the first terminal in the communication group start the second timer.

It may be understood that the first indication information may also be understood as a type of NACK. The NACK is different from a NACK fed back by a data transmitter UE to the base station in the conventional SL groupcast method. The NACKs may be specifically distinguished by using different SL PUCCH configurations or SL PUCCH resources.

Optionally, for SL communication, the base station may configure two sets of sidelink physical uplink control channel (physical uplink control channel, PUCCH) configuration information (sl-PUCCH-Config) for the data transmitter UE, used for transmission of HARQ feedback information used by the data transmitter UE to feed back SL transmission to the base station. One set is dedicated to sending the first indication information, in other words, the set of configuration information is applied to a scenario in which all the data receiver UEs in the communication group start the second timer, and the other set of configuration information is applied to a scenario in which not all the data receiver UEs in the communication group start the second timer. In this way, in S602, the first terminal may send the first indication information based on a dedicated SL PUCCH resource configured by the base station for the first indication information.

Optionally, for SL communication, the base station may alternatively configure one set of SL PUCCH configuration information for the data transmitter UE. However, a resource, a resource group, or a format in the configuration information may be divided into two sets. One set is dedicated to sending the first indication information, in other words, the set of configuration information is applied to the scenario in which all the data receiver UEs in the communication group start the second timer, and the other set of configuration information is applied to the scenario in which not all the data receiver UEs in the communication group start the second timer. In this way, in S602, the first terminal may send the first indication information based on the resource, resource group, or transmission format that is used to transmit the first indication information and that is indicated by the set of SL PUCCH configuration information configured by the base station.

Optionally, after receiving the first indication information sent by the first terminal, the base station may determine that all terminals in the communication group start the second timer. Therefore, new data transmission may be scheduled for the communication group during running of the second timer. Because a terminal that succeeds in decoding also starts the second timer, the terminal that succeeds in decoding can also receive the new data. Further, in one aspect, system transmission efficiency can be improved, and in another aspect, data transmission reliability can be ensured.

Optionally, if the first terminal indicates the terminal in the communication group to feed back one of a NACK and an ACK, the foregoing method may further include the following step.

S1603: Does the first terminal not receive a NACK or an ACK sent by the second terminal for N consecutive times? If yes, S1604 is performed.

N is an integer greater than 1. A value of N may be preset. Specifically, the value may be provided by the base station for the data transmitter UE (the first terminal), or may be preset.

S1604: The first terminal sends second indication information to the base station, where the second indication information indicates that the base station forbids scheduling new data transmission for the terminal in the communication group during running of only the second timer. The second terminal is any terminal other than the first terminal in the communication group.

For a scenario in which the HARQ feedback type is the HARQ option 2, for a single data receiver UE, the data transmitter UE may not receive feedback information of the data receiver UE for a plurality of consecutive times. In this case, according to the foregoing method, the data transmitter UE may stop sending, on an opportunity when only the second timer is run, newly transmitted data that is groupcast. That only the second timer is run may be understood as that currently only the second timer is run, and there is no on duration timer, or another timer that requires the data receiver UE to sense the PSCCH is running simultaneously with the second timer.

Optionally, the behavior of sending the first indication information to the base station by the first terminal may be limited to a configured quality of service (quality of service, QoS) requirement condition. For example, before sending the first indication information, the first terminal determines whether a configured QoS requirement is met. If the configured QoS requirement is met, the first indication information is sent; otherwise, the first indication information is not sent. Further, the first terminal may remove the foregoing limitation after subsequently receiving the feedback information sent by the data receiver UE in the communication group.

Embodiments of this application further provide an SL groupcast communication method, and the method may be applied to a data transmitter UE.

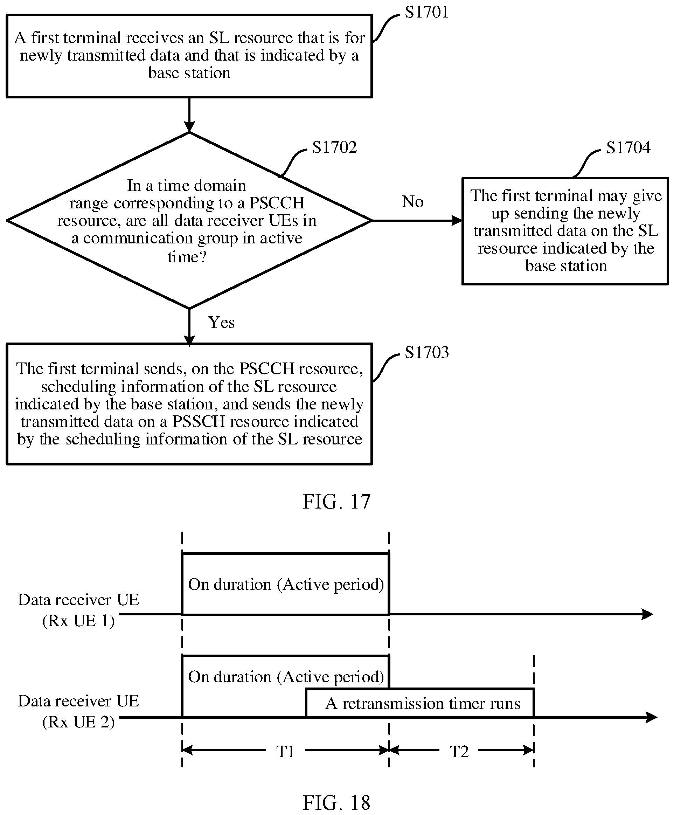

FIG. 17 is a schematic flowchart of an SL groupcast communication method applied to a data transmitter according to an embodiment of this application. The procedure may be applied to an SL groupcast scenario. In this embodiment, a first terminal is a data transmitter UE.

As shown in FIG. 17, the procedure may include the following steps.

S1701: The first terminal receives an SL resource that is for newly transmitted data and that is indicated by a base station.

S1702: The first terminal determines, in a time domain range corresponding to a PSCCH resource, whether all terminals other than the first terminal in a communication group to which the first terminal belongs are in active time (active time), where the PSCCH resource is used to carry SL resource scheduling information used for HARQ retransmission. If all the terminals other than the first terminal are in the active time, the procedure proceeds to S1703.

In the step, the first terminal determines, in the time domain range corresponding to the PSCCH resource, whether all the terminals other than the first terminal in the communication group to which the first terminal belongs are in the active time. If all the terminals other than the first terminal are in the active time, it indicates that all data receiver UEs in the communication group can sense the PSCCH resource, and further schedule newly transmitted data by using the PSCCH resource. In this way, it can be ensured that all the data receiver UEs in the communication group can receive the newly transmitted data.

That the terminals are in the active time may be simply understood as that the data receiver UEs can sense the PSCCH resource.

Specifically, if the data receiver UE starts a second timer (for example, a retransmission timer) and the second timer does not expire, it may be considered that the data receiver UE is in the active time. For another example, during running of an on duration timer, the data receiver UE may also be considered to be in the active time.

For example, as shown in FIG. 18, it is assumed that there is an on duration timer in groupcast communication, and a data transmitter UE (a Tx UE) can learn of a running state of a timer of a data receiver UE (an Rx UE). In this case, in a period of time T1, the on duration timer is run, and the Tx UE may consider that all Rx UEs are in active time (active time). In a period of time T2, although a retransmission timer is run, the on duration timer is not run in some periods of time. In this case, it is not considered that all Rx UEs are in active time (active time).

S1703: The first terminal sends, on the PSCCH resource, scheduling information of the SL resource indicated by the base station, and sends the newly transmitted data on a PSSCH resource indicated by the scheduling information of the SL resource.

Optionally, if the first terminal determines that, in the time domain range corresponding to the PSCCH resource, a terminal other than the first terminal in the communication group to which the first terminal belongs is in the active time, a priority of a logical channel corresponding to the newly transmitted data may be further set to the highest priority. In addition, when all other limitation conditions are met, the newly transmitted data is sent over the SL resource indicated by the base station.

Optionally, if the first terminal indicates the terminal in the communication group to feed back one of a NACK and an ACK, the foregoing method may further include the following step. If the first terminal receives no NACK or ACK sent by a second terminal for N consecutive times, the first terminal stops scheduling the newly transmitted data in the active time of the data receiver UE in the communication group. N is an integer greater than 1. A value of N may be preset. Specifically, the value may be provided by the base station for the data transmitter UE (the first terminal), or may be preset.

Optionally, the procedure may further include the following step.

S 1704: If the first terminal determines that, in the time domain range corresponding to the PSCCH resource, at least one terminal in the communication group to which the first terminal belongs is not in the active time (active time), the first terminal may give up sending the newly transmitted data on the SL resource indicated by the base station.

According to the procedure shown in FIG. 17, for an SL groupcast communication scenario, after receiving the SL resource that is for the newly transmitted data and that is indicated by the base station, the first terminal (the data transmitter UE) schedules the newly transmitted data by using the PSCCH resource only when determining that, in the time domain range corresponding to the PSCCH resource, all the data receiver UEs in the communication group are in the active time, that is, can sense the PSCCH resource. In this way, it can be ensured that the data receiver UE in the communication group can receive the newly transmitted data. Therefore, data transmission reliability can be ensured.

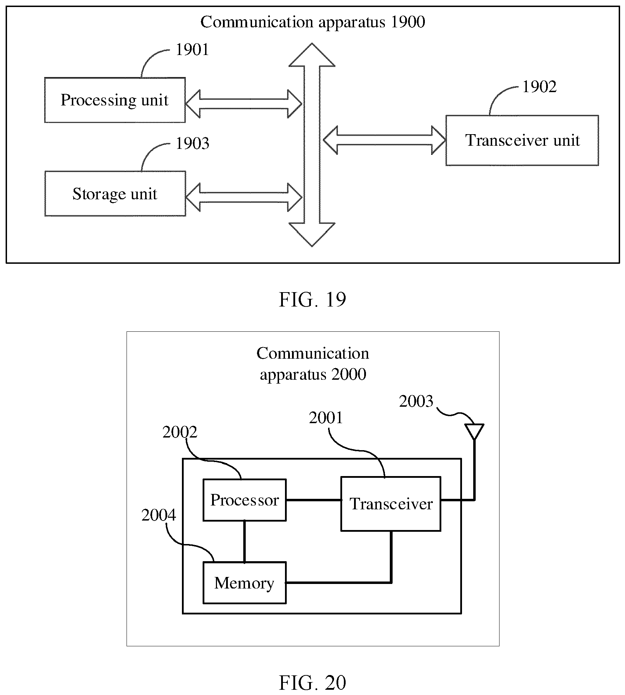

Based on a same invention concept, an embodiment of this application further provides a communication apparatus. The communication apparatus may have a structure shown in FIG. 19. The communication apparatus may be the terminal in the foregoing embodiment, or may be a chip or a chip system that can support the foregoing terminal in implementing the foregoing method. When the communication apparatus is the terminal in the foregoing embodiment, the communication apparatus has a behavior function of the terminal in the foregoing method embodiment.

As shown in FIG. 19, the communication apparatus 1900 may include a processing unit 1901 and a transceiver unit 1902. The communication apparatus 1900 may further include a storage unit 1903, and the storage unit 1903 may be coupled to the processing unit 1901, and is configured to store a program and instructions that are required by the processing unit 1901 to perform a function.

In some implementations, the communication apparatus 1900 may serve as a data receiver UE to perform the SL communication procedure shown in FIG. 9 or FIG. 15. For example, functions of functional modules in the communication apparatus 1900 are described as follows.

The transceiver unit 1902 is configured to receive first control information and first data from a first terminal (the data receiver UE), where a cast type indicated by the first control information is SL groupcast transmission with a NACK only feedback, and the first terminal and a second terminal are terminals in a same communication group.

The processing unit 1901 is configured to: start a first timer at a specified location after a HARQ feedback resource corresponding to the first data; and after the first timer expires, if successfully decoding the first data and detecting a NACK on the HARQ feedback resource, start a second timer.

Optionally, the first timer and the second timer are associated with SL process identification information indicated by the first control information. For related descriptions of the SL process identification information, refer to the descriptions in the foregoing related embodiments.

Optionally, the processing unit 1901 is further configured to: associate the first data with an SL process, where the SL process is used to process the first data; and when successfully decoding the first data, release the SL process associated with the first data.

Optionally, the operation of starting the first timer by the processing unit 1901 may specifically include: starting the first timer for a first SL process, where the first SL process is associated with the SL process identification information indicated by the first control information, and the first SL process is used to process the first data. The operation of starting the second timer by the processing unit 1901 may specifically include: starting the second timer for the first SL process.

Further, the processing unit 1901 may be configured to: if successfully decoding the first data and detecting a NACK on the HARQ feedback resource corresponding to the first data, continue to occupy the first SL process; or if successfully decoding the first data and detecting no NACK on the HARQ feedback resource corresponding to the first data, release the first SL process.

Optionally, the processing unit 1901 may be further configured to: if successfully decoding the first data, release the first SL process. The transceiver unit 1902 is further configured to: receive second data and second control information, where a cast type indicated by the second control information is groupcast transmission with a NACK only feedback. The processing unit 1901 is further configured to: associate a second SL process with SL process identification information indicated by the second control information, where the second process is used to process the second data; and if determining that the second data is retransmitted data of the first data, release the second SL process.

Optionally, the first control information does not indicate a resource location of the second control information, and the second control information indicates a retransmission resource of the first data.

In some other implementations, the communication apparatus 1900 may serve as a data receiver UE to perform the SL communication procedure shown in FIG. 12 or FIG. 15. For example, functions of functional modules in the communication apparatus 1900 are described as follows.

The transceiver unit 1902 is configured to receive first control information and first data from a first terminal (a data transmitter UE).

The processing unit 1901 is configured to: start a first timer at a specified location, where the first timer is associated with SL process identification information indicated by the first control information; and start a second timer based on a receiving status of the first data after the first timer expires, where the second timer is associated with the SL process identification information indicated by the first control information.

Optionally, a cast type indicated by the first control information includes one of the following:
SL unicast transmission;
SL groupcast transmission;
SL groupcast transmission with a NACK only feedback; or
SL groupcast transmission with a feedback of at least one of a NACK and an ACK.

Optionally, if the cast type indicated by the first control information is SL unicast transmission, SL groupcast transmission, or SL groupcast transmission with a feedback of one of a NACK and an ACK, the operation of starting, by the processing unit 1901, the second timer based on the receiving status of the first data after the first timer expires may include: if failing to decode the first data, starting the second timer after the first timer expires.

Optionally, if the cast type indicated by the first control information is SL groupcast with a NACK only feedback, the operation of starting, by the processing unit 1901, the second timer based on the receiving status of the first data after the first timer expires may include: if failing to decode the first data, starting the second timer after the first timer expires; or if successfully decoding the first data and receiving a NACK on a HARQ feedback resource corresponding to the first data, starting the second timer after the first timer expires.

Optionally, the specified location includes: the 1^{st} symbol after a resource carrying first-stage control information, where the first control information includes the first-stage control information; the 1^{st} symbol after the first control information is completely received; the 1^{st} symbol after a resource carrying the first data; or the 1^{st} symbol after the HARQ feedback resource corresponding to the first data.

Optionally, the first control information does not indicate a resource location of second control information, and the second control information indicates a retransmission resource of the first data.

In some other implementations, the communication apparatus 1900 may serve as a data receiver UE to perform the SL communication procedure shown in FIG. 13 or FIG. 15. For example, functions of functional modules in the communication apparatus 1900 are described as follows.

The transceiver unit 1902 is configured to receive first control information and first data from a first terminal (a data transmitter UE).

The processing unit 1901 is configured to: start a first timer for a first SL process at a specified location, where the first SL process is associated with SL process identification information indicated by the first control information, and the first SL process is used to process the first data; and start a second timer for the first SL process based on a receiving status of the first data after the first timer expires.

Optionally, a cast type indicated by the first control information includes one of the following:
SL unicast transmission;
SL groupcast transmission;
SL groupcast transmission with a NACK only feedback; or
SL groupcast transmission with a feedback of at least one of a NACK and an ACK.

Optionally, if the cast type indicated by the first control information is SL unicast transmission, SL groupcast transmission, or SL groupcast transmission with a feedback of one of a NACK and an ACK, the operation of starting, by the processing unit 1901, the second timer based on the receiving status of the first data after the first timer expires may include: if failing to decode the first data, starting the second timer after the first timer expires.

Optionally, if the cast type indicated by the first control information is SL groupcast with a NACK only feedback, the operation of starting, by the processing unit 1901, the second timer based on the receiving status of the first data after the first timer expires may include: if failing to decode the first data, starting the second timer after the first timer expires; or if successfully decoding the first data and receiving a NACK on a HARQ feedback resource corresponding to the first data, starting the second timer after the first timer expires.

Optionally, the specified location may include: the 1^{st} symbol after a resource carrying first-stage control information, where the first control information includes the first-stage control information; the 1^{st} symbol after the first control information is completely received; the 1^{st} symbol after a resource carrying the first data; or the 1^{st} symbol after the HARQ feedback resource corresponding to the first data.

Optionally, the processing unit 1901 may be further configured to: if successfully decoding the first data and detecting a NACK on the HARQ feedback resource corresponding to the first data, continue to occupy the first SL process; or if successfully decoding the first data and detecting no NACK on the HARQ feedback resource corresponding to the first data, release the first SL process.

Optionally, the processing unit 1901 is further configured to: if successfully decoding the first data, release the first SL process. Further, the transceiver unit 1902 is configured to: receive second data and second control information. The processing unit 1901 is further configured to: associate a second SL process with SL process identification information indicated by the second control information, where the second process is used to process the second data; and if determining that the second data is retransmitted data of the first data, release the second SL process.

Optionally, the first control information does not indicate a resource location of second control information, and the second control information indicates a retransmission resource of the first data.

In some other implementations, the communication apparatus 1900 may serve as a data receiver UE to perform the SL communication procedure shown in FIG. 14 or FIG. 15. For example, functions of functional modules in the communication apparatus 1900 are described as follows.

The transceiver unit 1902 is configured to receive first control information and first data from a first terminal (a data transmitter UE), where the first control information includes indication information, and the indication information indicates to start a second timer after a first timer expires.

The processing unit 1901 is configured to start the second timer based on the indication information after the first timer expires.

Optionally, the first control information indicates SL groupcast transmission with a NACK only feedback, the first control information indicates SL groupcast transmission with a feedback of one of a NACK and an ACK, or the first control information indicates SL groupcast transmission.

Optionally, the indication information further indicates a start moment of the second timer.

Optionally, the first timer and the second timer are associated with SL process identification information indicated by the first control information, the SL process identification information includes an SL process identifier, cast type indication information, a source L1 identifier, and a destination L1 identifier, and the cast type indication information indicates SL groupcast transmission with a NACK only feedback, or indicates SL groupcast transmission.

Optionally, the processing unit 1901 is further configured to: associate the first data with an SL process, where the SL process is used to process the first data; and when successfully decoding the first data, release the SL process associated with the first data.

Optionally, the operation of starting the first timer by the processing unit 1901 may include: starting the first timer for a first SL process, where the first SL process is associated with the SL process identification information indicated by the first control information, and the first SL process is used to process the first data. The operation of starting the second timer by the processing unit 1901 may include: starting the second timer for the first SL process.

Further, the processing unit 1901 may be configured to: if successfully decoding the first data and detecting a NACK on a HARQ feedback resource corresponding to the first data, continue to occupy the first SL process; or if successfully decoding the first data and detecting no NACK on a HARQ feedback resource corresponding to the first data, release the first SL process.

Optionally, the processing unit 1901 may be further configured to: if successfully decoding the first data, release the first SL process. The transceiver unit 1902 is further configured to: receive second data and second control information. The processing unit 1901 is further configured to: associate a second SL process with SL process identification information indicated by the second control information, where the second process is used to process the second data; and if determining that the second data is retransmitted data of the first data, release the second SL process.

Optionally, the first control information does not indicate a resource location of second control information, and the second control information indicates a retransmission resource of the first data.

In some other implementations, the communication apparatus 1900 may serve as a data transmitter UE to perform the SL communication procedure shown in FIG. 14 or FIG. 15. For example, functions of functional modules in the communication apparatus 1900 are described as follows.

The transceiver unit 1902 is configured to send first data and first control information to a terminal in a communication group, where the first control information includes indication information, and the indication information indicates the terminal in the communication group to start a second timer when a first timer expires.

Optionally, before the transceiver unit 1902 sends the first data and the first control information to the terminal in the communication group, the processing unit 1901 is further configured to: determine that the terminal in the communication group needs to be indicated to start the second timer after the first timer expires; or determine, based on an indication of a base station, to indicate the terminal in the communication group to start the second timer after the first timer expires.

The processing unit 1901 is further configured to: determine that the terminal in the communication group needs to be indicated to start the second timer after the first timer expires, and notify a base station that the terminal in the communication group has been indicated to start the second timer after the first timer expires.

Optionally, the transceiver unit 1902 may be further configured to: send new data to the terminal in the communication group during running of the second timer.

Optionally, the first control information indicates SL groupcast transmission with a NACK only feedback, the first control information indicates SL groupcast transmission with a feedback of one of a NACK and an ACK, or the first control information indicates SL groupcast transmission.

Optionally, the indication information further indicates a start moment of the second timer.

Optionally, the first control information does not indicate a resource location of second control information, and the second control information indicates a retransmission resource of the first data.

In some other implementations, the communication apparatus 1900 may serve as a data transmitter UE to perform the SL communication procedure shown in FIG. 16. For example, functions of functional modules in the communication apparatus 1900 are described as follows.

The processing unit 1901 is configured to determine whether all terminals other than a terminal in a communication group to which the terminal belongs start a second timer. If it is determined that all the terminals other than the terminal start the second timer, the transceiver unit 1902 sends first indication information to a base station, where the first indication information indicates that all terminals other than a first terminal in the communication group start the second timer.

Optionally, the transceiver unit 1902 is specifically configured to: send the first indication information based on a dedicated sidelink physical uplink control channel SL PUCCH resource configured by the base station for the first indication information; or send the first indication information based on a resource, resource group, or transmission format that is used to transmit the first indication information and that is indicated by SL PUCCH configuration information configured by the base station.

Optionally, if the terminal indicates the terminal in the communication group to feed back one of a NACK and an ACK, the processing unit 1901 may be further configured to: if a NACK or an ACK sent by a second terminal (a data receiver UE, namely, any terminal other than the data receiver UE in the communication group) is not received for N consecutive times, send second indication information to the base station, where the second indication information indicates the base station to forbid scheduling new data transmission for the terminal in the communication group during running of only the second timer. N is an integer greater than 1.

In some other implementations, the communication apparatus 1900 may serve as a data transmitter UE to perform the SL communication procedure shown in FIG. 17. For example, functions of functional modules in the communication apparatus 1900 are described as follows.

The transceiver unit 1902 is configured to receive an SL resource that is for newly transmitted data and that is indicated by a base station.

The processing unit 1901 is configured to: determine, in a time domain range corresponding to a PSCCH resource, whether all terminals other than a terminal in a communication group to which the terminal belongs are in active time, where the PSCCH resource is used to carry SL resource scheduling information used for HARQ retransmission; and if all the terminals other than the terminal are in the active time, the transceiver unit 1902 sends, on the PSCCH resource, scheduling information of the SL resource indicated by the base station, and sends the newly transmitted data on a PSSCH resource indicated by the scheduling information of the SL resource.

It should be noted that for a specific implementation of the foregoing functions of the communication apparatus 1900, refer to related content in a corresponding embodiment. For related descriptions of the SL process identification information, the first timer, the second timer, and the like, refer to the related content in the foregoing embodiment.

In addition, an embodiment of this application further provides a communication apparatus. The communication apparatus may have a structure shown in FIG. 20. The communication apparatus may be a terminal, or may be a chip or a chip system that can support the terminal in implementing the foregoing method.

The communication apparatus 2000 shown in FIG. 20 may include at least one processor 2002. The at least one processor 2002 is configured to: be coupled to a memory, and read and execute instructions in the memory, to implement the step in the terminal device in the method provided in embodiments of this application. Optionally, the communication apparatus 2000 may further include a transceiver 2001, configured to support the communication apparatus 2000 in receiving or sending signaling or data. The transceiver 2001 in the communication apparatus 2000 may be configured to implement a function of the foregoing transceiver unit 1902, and the processor 2002 may be configured to implement a function of the foregoing processing unit 1901. In addition, the transceiver 2001 may be coupled to an antenna 2003, and is configured to support the communication apparatus 2000 in performing communication. Optionally, the communication apparatus 2000 may further include a memory 2004, which stores a computer program and instructions. The memory 2004 may be coupled to the processor 2002 and/or the transceiver 2001, and is configured to support the processor 2002 in invoking the computer program and the instructions in the memory 2004, to implement the step related to the network device in the method provided in embodiments of this application. In addition, the memory 2004 may be further configured to store data in method embodiments of this application. For example, the memory is configured to store data and instructions that are necessary for supporting the transceiver 2001 in implementing interaction, and/or is configured to store configuration information that is necessary for the communication apparatus 2000 to perform the method in embodiments of this application.

Based on a same concept as that in the foregoing method embodiment, an embodiment of this application further provides a computer-readable storage medium. The computer-readable storage medium stores some instructions. When the instructions are invoked and executed by a computer, the computer may be enabled to complete the foregoing method embodiment and the method in any one of the possible designs of the method embodiment. In this embodiment of this application, no limitation is imposed on the computer-readable storage medium. For example, the computer-readable storage medium may be a random-access memory (random-access memory, RAM), a read-only memory (read-only memory, ROM), or the like.

Based on a same concept as that in the foregoing method embodiment, this application further provides a computer program product. When being invoked and executed by a computer, the computer program product may implement the method embodiment and the method in any one of the possible designs of the foregoing method embodiment.

Based on a same concept as that in the foregoing method embodiment, this application further provides a chip. The chip may include a processor and an interface circuit, to complete the foregoing method embodiment and the method in any one of the possible implementations of the method embodiment. "Coupling" means that two components are joined directly or indirectly to each other, and the combination may be fixed or movable. Such combination may allow flowing liquid, electrical, electrical or other type of signal to communicate between the two components.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be achieved through the combination of computing apparatuses, such as combination of a digital signal processor and a microprocessor, a plurality of microprocessors, one or more microprocessors and one digital signal processor, or any other similar configurations.

Steps of the methods or algorithms described in embodiments of this application may be directly embedded into hardware, a software unit executed by the processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, storage media may be connected to the processor, so that the processor can read information from the storage media and may save the information in the storage media. Optionally, the storage media may alternatively be integrated into the processor. The processor and the storage media may be disposed in an ASIC, and the ASIC may be disposed in a terminal device. Optionally, the processor and the storage media may alternatively be disposed in different components in the terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although the present invention is described with reference to specific features and embodiments thereof, it is clear that various modifications and combinations may be made to them without departing from the scope of the present invention. Correspondingly, the specification and the accompanying drawings are merely example descriptions of the present invention defined in the appended claims, and are considered as any of or all modifications, variations, combinations, or equivalents that cover the scope of the present invention. It is clear that a person skilled in the art can make various modifications and variations to the present invention without departing from the scope of the present invention. The present invention is intended to cover these modifications and variations provided that they fall within the scope of protection defined by the following claims and their equivalent technologies.

## Claims

1. A sidelink SL communication method, comprising:
receiving, by a second terminal, first control information and first data from a first terminal, wherein a cast type indicated by the first control information is sidelink SL groupcast transmission with a negative acknowledgement NACK only feedback, and the first terminal and the second terminal are terminals in a same communication group;
starting, by the second terminal, a first timer at a specified location after a hybrid automatic repeat request HARQ feedback resource corresponding to the first data, wherein duration of the first timer indicates minimum duration that elapses before SL resource scheduling information used for HARQ retransmission is expected to be received; and
after the first timer expires, if the second terminal successfully decodes the first data and detects a NACK on the HARQ feedback resource, starting, by the second terminal, a second timer, wherein duration of the second timer indicates maximum duration that elapses before the SL resource scheduling information used for HARQ retransmission is received.

2. The method according to claim 1, wherein the first timer and the second timer are associated with SL process identification information indicated by the first control information, the SL process identification information comprises an SL process identifier, cast type indication information, a source L1 identifier, and a destination L1 identifier, and the cast type indication information indicates SL groupcast transmission with a NACK only feedback, or indicates SL groupcast transmission.

3. The method according to claim 2, further comprising:
associating, by the second terminal, the first data with an SL process, wherein the SL process is used to process the first data; and
when the second terminal successfully decodes the first data, releasing the SL process associated with the first data.

4. The method according to claim 1, wherein
the starting, by the second terminal, a first timer comprises:
starting, by the second terminal, the first timer for a first SL process, wherein the first SL process is associated with the SL process identification information indicated by the first control information, and the first SL process is used to process the first data; and
the starting, by the second terminal, a second timer comprises:
starting, by the second terminal, the second timer for the first SL process.

5. The method according to claim 4, further comprising:
if the second terminal successfully decodes the first data and detects the NACK on the HARQ feedback resource, continuing to occupy the first SL process; or
if the second terminal successfully decodes the first data and detects no NACK on the HARQ feedback resource, releasing the first SL process.

6. The method according to claim 4, further comprising:
if the second terminal successfully decodes the first data, releasing the first SL process;
receiving, by the second terminal, second data and second control information, wherein a cast type indicated by the second control information is groupcast transmission with a NACK only feedback;
associating, by the second terminal, a second SL process with SL process identification information indicated by the second control information, wherein the second process is used to process the second data; and
if the second terminal determines that the second data is retransmitted data of the first data, releasing the second SL process.

7. The method according to any one of claims 1 to 6, wherein the first control information does not indicate a resource location of the second control information, and the second control information indicates a retransmission resource of the first data.

8. A sidelink SL communication method, comprising:
receiving, by a second terminal, first control information and first data from a first terminal, wherein the first control information comprises indication information, the indication information indicates the second terminal to start a second timer when a first timer expires, duration of the first timer indicates minimum duration that elapses before sidelink SL resource scheduling information used for hybrid automatic repeat request HARQ retransmission is expected to be received, duration of the second timer indicates maximum duration that elapses before the SL resource scheduling information used for HARQ retransmission is received, and the first terminal and the second terminal are terminals in a same communication group; and
starting, by the second terminal, the second timer based on the indication information when the first timer expires.

9. The method according to claim 8, wherein the first control information indicates SL groupcast transmission with a negative acknowledgement NACK only feedback, the first control information indicates SL groupcast transmission with a feedback of one of a NACK and an acknowledgement ACK, or the first control information indicates SL groupcast transmission.

10. The method according to claim 8 or 9, wherein the indication information further indicates a start moment of the second timer.

11. The method according to any one of claims 8 to 10, wherein the first timer and the second timer are associated with SL process identification information indicated by the first control information, the SL process identification information comprises an SL process identifier, cast type indication information, a source L1 identifier, and a destination L1 identifier, and the cast type indication information indicates SL groupcast transmission with a NACK only feedback, or indicates SL groupcast transmission.

12. The method according to claim 11, further comprising:
associating, by the second terminal, the first data with an SL process, wherein the SL process is used to process the first data; and
when the second terminal successfully decodes the first data, releasing the SL process associated with the first data.

13. The method according to any one of claims 8 to 10, wherein that the second terminal starts the first timer comprises:
starting, by the second terminal, the first timer for a first SL process, wherein the first SL process is associated with the SL process identification information indicated by the first control information, and the first SL process is used to process the first data; and
the starting, by the second terminal, the second timer comprises:
starting, by the second terminal, the second timer for the first SL process.

14. The method according to claim 13, further comprising:
if the second terminal successfully decodes the first data and detects a NACK on a HARQ feedback resource, continuing to occupy the first SL process; or
if the second terminal successfully decodes the first data and detects no NACK on a HARQ feedback resource, releasing the first SL process.

15. The method according to claim 13, further comprising:
if the second terminal successfully decodes the first data, releasing the first SL process;
receiving, by the second terminal, second data and second control information;
associating, by the second terminal, a second SL process with SL process identification information indicated by the second control information, wherein the second process is used to process the second data; and
if the second terminal determines that the second data is retransmitted data of the first data, releasing the second SL process.

16. The method according to any one of claims 8 to 15, wherein the first control information does not indicate a resource location of the second control information, and the second control information indicates a retransmission resource of the first data.

17. A sidelink SL communication method, comprising:
sending, by a first terminal, first data and first control information to a terminal in a communication group to which the first terminal belongs, wherein the first control information comprises indication information, the indication information indicates the terminal in the communication group to start a second timer when a first timer expires, duration of the first timer indicates minimum duration that elapses before sidelink SL resource scheduling information used for hybrid automatic repeat request HARQ retransmission is expected to be received, duration of the second timer indicates maximum duration that elapses before the SL resource scheduling information used for HARQ retransmission is received, and the first terminal and a second terminal are terminals in the same communication group.

18. The method according to claim 17, wherein before the sending, by a first terminal, first data and first control information to a terminal in a communication group to which the first terminal belongs, the method further comprises:
determining, by the first terminal, that the terminal in the communication group needs to be indicated to start the second timer after the first timer expires; or
determining, by the first terminal based on an indication of a base station, to indicate the terminal in the communication group to start the second timer after the first timer expires.

19. The method according to claim 17, further comprising:
determining, by the first terminal, that the terminal in the communication group needs to be indicated to start the second timer after the first timer expires, and notifying a base station that the terminal in the communication group has been indicated to start the second timer after the first timer expires.

20. The method according to any one of claims 17 to 19, further comprising:
sending, by the first terminal, new data to the terminal in the communication group during running of the second timer.

21. The method according to any one of claims 17 to 20, wherein the first control information indicates SL groupcast transmission with a negative acknowledgement NACK only feedback, the first control information indicates SL groupcast transmission with a feedback of one of a NACK and an acknowledgement ACK, or the first control information indicates SL groupcast transmission.

22. The method according to any one of claims 17 to 21, wherein the indication information further indicates a start moment of the second timer.

23. The method according to any one of claims 17 to 22, wherein the first control information does not indicate a resource location of second control information, and the second control information indicates a retransmission resource of the first data.

24. A sidelink SL communication method, comprising:
determining, by a first terminal, that all terminals other than the first terminal in a communication group to which the first terminal belongs start a second timer, wherein duration of the second timer indicates maximum duration that elapses before sidelink SL resource scheduling information used for hybrid automatic repeat request HARQ retransmission is received; and
sending, by the first terminal, first indication information to a base station, wherein the first indication information indicates that all the terminals other than the first terminal in the communication group start the second timer.

25. The method according to claim 24, wherein the sending first indication information to a base station comprises:
sending, by the first terminal, the first indication information based on a dedicated sidelink physical uplink control channel SL PUCCH resource configured by the base station for the first indication information; or
sending, by the first terminal, the first indication information based on a resource, resource group, or transmission format that is used to transmit the first indication information and that is indicated by SL PUCCH configuration information configured by the base station.

26. The method according to claim 24 or 25, wherein if the first terminal indicates the terminal in the communication group to feed back one of a negative acknowledgement NACK and an acknowledgement ACK, the method further comprises:
if the first terminal receives no NACK or ACK sent by a second terminal for N consecutive times, sending second indication information to the base station, wherein the second indication information indicates the base station to forbid scheduling new data transmission for the terminal in the communication group during running of only the second timer, wherein N is an integer greater than 1, and the second terminal is any terminal other than the first terminal in the communication group.

27. A communication apparatus, comprising: one or more processors and one or more memories, wherein the one or more memories store one or more computer programs, the one or more computer programs comprise instructions, and when the instructions are executed by the one or more processors, the communication apparatus is enabled to perform the method according to any one of claims 1 to 26.

28. A computer-readable storage medium, wherein the computer-readable storage medium comprises a computer program, and when the computer program is running on a computing device, the computing device is enabled to perform the method according to any one of claims 1 to 26.

29. A chip, wherein the chip is coupled to a memory, and is configured to read and execute program instructions stored in the memory, to implement the method according to any one of claims 1 to 26.

30. A computer program product, wherein when the computer program product is invoked by a computer, the computer is enabled to perform the method according to any one of claims 1 to 26.
